# EUROPÄISCHE PATENTSCHRIFT

(11) **EP 2 532 989 B1**
(45) Veröffentlichungstag und Bekanntmachung des Hinweises auf die Patenterteilung: **14.05.2014**
(21) Anmeldenummer: 12004326.0
(22) Anmeldetag: 06.06.2012
(51) Int. Cl.: F24J 2/54, H01L 31/042

(54) **Anlage mit einer um eine horizontale Achse einachsig verstellbaren Tragstruktur zur Aufnahme eines oder mehrerer Solarpaneele oder Photovoltaikmodule od. dgl.**
Assembly with a support structure that can be adjusted around a single horizontal axis for holding one or more solar panels, photovoltaic modules or the like
Installation dotée d'une structure de support réglable sur un axe autour d'un axe horizontal pour la réception d'un ou plusieurs panneaux solaires ou modules photovoltaïques ou analogues

(30) Priorität: 06.06.2011 DE 102011103724
(43) Veröffentlichungstag der Anmeldung: 12.12.2012
(73) Patentinhaber: IMO Holding GmbH, 91350 Gremsdorf (DE)
(72) Erfinder: Ruß, Erich, 91350 Gremsdorf (DE); Büttel, Konrad, 96129 Stullendorf (DE); Nief, Richard, 91083 Baiersdorf (DE); Frank, Hubertus, 91315 Höchstadt (DE); Dietz, Volker, 91315 Höchstadt (DE)
(74) Vertreter: Küchler, Stefan

(56) Entgegenhaltungen:
- EP-A2- 2 317 247
- DE-A1-102006 036 150
- ES-A1- 2 354 560
- US-A1- 2009 229 597
- US-A1- 2011 000 479

## Beschreibung

Die Erfindung richtet sich auf eine Solaranlage mit wenigstens einer um eine horizontale Hauptachse einachsig verstellbaren Tragstruktur für Solarpaneele oder Photovoltaikmodule, um diese aufzunehmen und/oder zu tragen, sowie um deren Neigungs- oder Elevationswinkel zu ändern, und mit wenigstens einem Drehantrieb zur aktiven, rotatorischen Verstellung der Tragstruktur um die horizontale Hauptachse, der als Schwenkeinheit ausgebildet ist mit zwei zueinander konzentrischen, ringförmigen Anschlusselementen, welche aneinander gelagert und zur gegenseitigen Relatiwerstellung mit mindestens einem Motor gekoppelt oder koppelbar sind, wobei ein erstes Anschlusselement der ortsfesten Fixierung an einem Sockel, Ständer od. dgl. dient und ein zweites Anschlusselement mit der Tragstruktur drehfest gekoppelt wird.

Seit mehreren Dekaden widmen sich Techniker und Ingenieure weltweit der Konstruktion von Systemen, mit denen die Energie der Sonnenstrahlen aufgefangen und technisch nutzbar gemacht werden kann. Jedoch ist die technische Nutzbarmachung von Sonnenenergie erst in der letzten Zeit derart effizient geworden, dass diese auch wirtschaftlich gewinnversprechend ist, vor Allem auch deshalb, weil nun entsprechend effiziente Komponenten (vor Allem bei der Photovoltaik) zur Aufnahme und Wandlung der von den elektromagnetische Wellen in Form von Licht- oder Sonnenstrahlen übermittelten Energie zur Verfügung stehen.

Während vor mehr als 20 Jahren die Technologie zur Nutzbarmachung der Sonnenstrahlung für Umwandlung von Wärme in elektrische Energie im Wesentlichen darin bestand, möglichst gute Reflektoren und Spiegelapparaturen oder auch parabolische Anordnungen in geeigneter Weise auf gewisse Punkte zu konzentrieren bzw. zu fokussieren, um dort, zumeist im Brennpunkt solcher Spiegelapparaturen, die Energie zu bündeln und konzentriert nutzen zu können, beispielsweise durch Erhitzung von zentral aufgestellten Medienbehältern zwecks Verdampfung nach dem Prinzip der Krafterzeugung durch Heißdampf und anschließender generatorischer Wandlung, so hat sich vor Allem in den etwa letzten 20 Jahren die Technologie zur Nutzbarmachung der Sonnenstrahlung schwerpunktmäßig dahin verlagert, die immer effizienter gewordenen Solarpaneele, insbesondere auch in Form von flachen Sonnenkollektoren, auch Solar- oder Photovoltaikmodule (Abk.: PV) oder Solarzellen genannt, zu verwenden. Standardgemäß werden heute leistungsfähigere kristalline PV-Module oder auch PV-Dünnschichttechnologie-Module verwendet.

Ein wesentlicher Kern der Ideen zur Nutzbarmachung der Sonnenstrahlung war stets eine optimale Ausrichtung der Trägerapparaturen für Energie aufnehmende Einheiten (wie Reflektoren, Spiegelapparaturen, Parabolanordnungen, Solarpaneele, Solarzellen, PV-Module, etc.) nach dem Stand der Sonne und zwar so, dass möglichst eine maximale Ausbeute an Sonnenstrahlen auf die Energie aufnehmende Einheit auftrifft. Die Solar-/Sonnenenergie aufnehmende oder reflektierende Einheit wird dabei häufig von einem Trägersystem gehalten und in weiterentwickelten Anwendungen auch dem Sonnenstand nachgeführt. Aktuell handelsübliche und im Einsatz befindliche Nachführsysteme für solare Anwendungen, die es ermöglichen, Geräte zur Absorption von elektromagnetischen Strahlen, insbesondere Sonnenstrahlen, einer Bahn entsprechend auszurichten, sind meistens zweiachsig ausgeführt, d.h., sie erlauben eine Nachführung um zwei unterschiedliche Achsen, so dass die Fläche der betreffenden Module stets tangential zur Sonne ausgerichtet ist und die von der Sonne kommenden Strahlen also lotrecht auf dem betreffenden Modul auftreffen.

Bspw. beschreibt die DE 294 39 44 aus dem Veröffentlichungsjahr 1981 eine Vorrichtung zum unabhängigen Drehen eines Aggregates um zwei senkrecht zueinander stehende Achsen, insbesondere zum Nachführen von Sonnenkollektoren, wobei die Abtriebswelle einer im Wesentlichen aus einem Gehäuse, einem E-Motor, einem mehrstufigen Planetengetriebe und einer Stirnradstufe bestehenden feststehenden ersten Antriebseinrichtung an einem freien Ende das Gehäuse einer im Wesentlichen aus dem Gehäuse, einem E-Motor, einem mehrstufigen Planetengetriebe und einer Stirnradstufe bestehenden drehbaren zweiten Antriebseinrichtung trägt, deren senkrecht zur Abtriebswelle der ersten Antriebseinrichtung gerichtete Abtriebswelle an ihren freien Enden die zu drehenden Aggregate trägt.

Während also bei zweiachsig nachgeführten Systemen die Gesamtanordnung jederzeit auch gleichzeitig in vertikaler und horizontaler Richtung (also in Elevation und Azimut) nachgeführt werden kann, ist bei einachsig nachgeführten Systemen dagegen stets nur eine Nachführung in einer einzigen Richtung möglich, also wahlweise entweder nur in einer etwa vertikalen Richtung, auch Elevation genannt, oder nur horizontal, auch azimutal genannt, so zeigt gemäß den Definitionen im aktuellen Stand der Technik also ein einachsig in horizontaler Richtung, d.h., um eine vertikale Achse, nachgeführter Sonnenkollektor bei 0° Azimut direkt gegen Süden, so dass von Süden kommende Sonnenstrahlen optimal auf die Energie aufnehmende Einheit auftreffen, bei -90° direkt gegen Ost, bei -45° direkt gegen Südost, bei +45° direkt gegen Südwest und bei +90° direkt gegen West, während die Neigung gegenüber der Vertikalen solchenfalls unverändert bleiben muss in Ermangelung einer zweiten Dreh- oder Schwenkachse.

Andererseits bietet ein einachsig nachgeführtes System gegenüber einer fest in Richtung Süden montierten Anlage bereits Ertragsvorteile von bis zu 30 %, während mit einer zweiachsigen Nachführung bei einer optimal ausgelegten Anlage sogar bis zu 45 % Mehrertrag erreichbar ist. Zweiachsig nachgeführte Systeme liefern also bessere Erträge, sind aber auch komplexer und damit kostspieliger und störanfälliger. In Anbetracht dieser Zusammenhänge favorisiert die vorliegende Erfindung das Prinzip einer einachsigen Nachführung.

Ein solches Prinzip offenbart das im Jahr 2004 erteilte Patent EP 0 114 240, nämlich ein einachsig linear nachgeführtes System einer Sonnenkollektoranlage mit mindestens einem in Nord-Süd-Richtung orientiertem Torsionsrohr, welches eine Reihe von flachen, rechteckigen Sonnenkollektoren trägt. Eine horizontale Schubstange kann mehrere Reihen von Solarkollektoren verfahren.

Als weiterer Stand der Technik sei das US-Patentdokument US 2011/0023940 A1 genannt, worin ein einachsig nachführbares Kollektorsystem für Sonnenenergie beschrieben ist. Dabei kommt zum Drehantrieb zwar eine Schwenkeinheit zum Einsatz, worin innerhalb eines Gehäuses ein Drehteil verschwenkbar angeordnet ist. Da das Gehäuse das Drehteil an einer Stirnseite umgreift, ist an der dortigen Stirnseite keine Befestigung einer Tragstruktur möglich, sondern nur einseitig an der gegenüber liegenden Stirnseite. Dies führt zu einer sehr komplexen und wenig belastbaren Konstruktion, so dass neben einer Drehantriebseinheit stets mehrere zusätzliche Lagereinheiten erforderlich sind.

Der bisherige Stand der Technik weist, kurz zusammengefasst, generell die folgenden Nachteile und Eigenschaften auf:
1. Aufdach-Anlagenlösungen (engl.: building-integrated) auf Carports oder auf Gebäuden sind laut heutigem Stand der Technik nicht nachgeführt und zumeist fest eingebaut. Nicht nachgeführte Systeme bieten jedoch Nachteile in der Ausbeute.
2. Indach-Anlagenlösungen auf Gebäuden sind laut heutigem Stand der Technik Stand stets mit dem Gebäude verbunden, in der Regel kraftschlüssig, etwa geschraubt oder gedübelt oder über Klicksysteme integriert. Dadurch wird in der Regel die Dachoberfläche (Dachhaut) manipuliert, in der Regel penetriert bzw. kontrolliert beschädigt. Sei es auch, um Befestigungen der Indach-Anlagenlösungen (engl. roof-integrated) gezielt anbringen zu können. Da Dächer stets den Umwelteinflüssen ausgesetzt sind, müssen tiefe Installationslöcher, Bohrungen, Schraubungen, etc. nachträglich abgedichtet werden, oder zumindest so angebracht werden, dass Wind und Wetter nicht nachträglich das Bauwerk schädigen können.
3. Zweiachsig nachgeführte Systeme sind teurer als einachsig nachgeführte Systeme. Zweiachsig nachgeführte Systeme existieren bis heute nur als Freilandanlagen (engl.: free standing). Im Übrigen wird hierbei eine Nachführung der Elevation stets mit sehr speziellen linearen Stellantrieben bewerkstelligt.
4. Generell bieten einachsig nachführbare Systeme einen beschränkten Nachführungsbereich, beispielsweise hinsichtlich der Elevation um eine Achse in Ost-West-Richtung.
5. Alle bisher im Markt erhältlichen Systeme sind stets für eine der folgenden Einsatzgebiete konzipiert: Entweder für freistehende Freilandanlagen (engl.: free standing) oder für Indach-Systeme (engl.: roof-integrated) oder aber für Aufdach-Montage; gebäudeintegriert (engl.: building-integrated). Ein immens großer Nachteil ist es, dass keine Technik der aktuellen Systeme es ermöglicht, eine prinzipiell Anordnung bereitzustellen, die in allen der soeben genannten Einsatzgebieten verwendet werden kann.

ES-A-2 354 560 offenbart eine Solaranlage gemäß dem Oberbegriff des Anspruchs 1.

Aus den Nachteilen des beschriebenen Standes der Technik resultiert das die Erfindung initiierende Problem, die Nachteile des genannten Standes der Technik zu vermeiden, so dass eine kostengünstige, einem Gestirn einachsig nachführbare Anlage geschaffen wird, welche sowohl als Erstausrüstung verwendet werden kann, aber auch als Nachrüstsystem auf bestehenden Nutz- oder Freiflächen oder Gebäuden.

Die Lösung dieses Problems gelingt durch eine Solaranlage gemäß dem Oberbegriff Anspruchs 1.

Die Ansprüche 2-13 enthalten vorteilhafte Ausgestaltungen der Erfindung gemäß Anspruchs 1.

Eine Tragstruktur kann nach Art eines relativ großflächigen Rahmens gestaltet sein, um gleichzeitig mehrere flächige Sonnenkollektoren nebeneinander abzustützen, so dass für deren gemeinsame Nachstellbewegung nur ein einziger Antrieb erforderlich ist. Dabei ermöglicht es die Erfindung, eine Tragstruktur im Idealfall symmetrisch oberhalb der erfindungsgemäßen Schwenkeinheit zu positionieren, die zu beiden Seiten des erfindungsgemäßen Schwenktriebs mit jenem verbunden ist. Solchenfalls kann ggf. auf zusätzliche Lagerungen verzichtet werden, weil jedenfalls die statischen Kräfte sich gegenseitig aufheben, denn der Schwerpunkt der Tragstruktur liegt dann stets etwa vertikal oberhalb des Schwenktriebs. In diesem Fall ergeben sich mehrere Vorteile: Einerseits ist es möglich, eine gesamte, mehrere Solarkollektoren halternde Tragstruktur auf nur einer einzigen Schwenkeinheit abzustützen, so dass auf zusätzliche, kostspielige Lagerungen verzichtet werden kann. Ferner kann eine an wenigstens einem zentralen Punkt abgestützte Tragstruktur verhältnismäßig groß gestaltet werden und damit entsprechend viele Solarkollektoren abstützen. Schließlich kann der Unterbau für die betreffende Tragstruktur maximal schlank gestaltet werden, im Idealfall in Form einer einzigen, zentralen Säule. Dies wiederum bietet die Möglichkeit, eine solche Tragstruktur auf vorhandenen Nutz- oder Freiflächen zu installieren, derart, dass der Platz unterhalb der Tragstruktur und neben dem Unterbau anderweitig genutzt werden kann, bspw. als Parkplatz. Andererseits wird damit auch eine ggf. nachträgliche Montage auf Gebäuden ermöglicht, selbst wenn der dort vorhandene Platz kleiner ist als die seitliche Ausladung der Tragstruktur.

Darüber hinaus besteht auch die Möglichkeit, eine derartige Schwenkeinheit zwischen zwei benachbarten Tragstrukturen anzuordnen und diese simultan anzusteuern, so dass sich der Stellaufwand weiter reduziert, indem die Anzahl der benötigten Schwenkeinheiten dann nur halb so groß ist wie die Anzahl der Tragstrukturen. Dabei kann jede Tragstruktur an je einer Anschlussfläche der erfindungsgemäßen Schwenkeinheit drehfest angeschlossen werden.

Eine weitere Reduzierung des Antriebsaufwandes lässt sich erreichen, indem weitere Tragstrukturen angekoppelt werden, bspw. über gemeinsame Lagerungen zwischen benachbarten Tragstrukturen, wobei sich diese Lagerungen sodann bevorzugt auf derselben Hauptachse befinden wie erfindungsgemäße Schwenkeinheit. Es ergibt sich damit eine Reihe von Tragstrukturen, welche allesamt an nur eine einzige Schwenkeinheit angekoppelt sind und von dieser simultan verstellt werden, also mit minimalem konstruktivem Aufwand.

Sollen gar mehrere derartige Reihen von Tragstrukturen jeweils einachsig verstellt werden, so ist eine gegenseitige Kopplung bspw. über Gestänge möglich, wenn die Länge eines derartigen Gestänges etwa dem Abstand zweier benachbarter Tragstruktur-Reihen entspricht. Im Idealfall können sogar über mehrere derartige Gestänge entsprechend viele Tragstruktur-Reihen an die Reihe mit dem Schwenktrieb angekoppelt werden, so dass es möglich ist, ein gesamtes Feld oder zumindest einen größeren Bereich eines Solarfeldes mit nur einem einzigen Schwenktrieb einachsig nachzuführen. Auf diese Weise ist mit einem geringsten konstruktiven Aufwand eine maximale Energieausbeute erzielbar. Dabei ist ein weiterer, wünschenswerter Nebeneffekt, dass ein Schneckentrieb eine vergleichsweise hohe KraftÜbersetzung bei gleichzeitig starker Drehzahl-Untersetzung aufweist, so dass mit einer vergleichsweise geringen Antriebsleistung hohe Drehmomente und Kräfte erzeugt werden können. Darüber hinaus ist ein Schwenktrieb im Idealfall selbsthemmend, d.h., bei starkem Wind oder Sturm verhindert die Geometrie der Schnecke ein Durchziehen der Last und damit eine ungewollte Verstellung der Tragstrukturen.

Die Mittenfreiheit der erfindungsgemäßen Anschlussringe erlaubt es überdies, Kabel od. dgl. zentral hindurchzuführen, so dass auf diesem Weg auch die Zusammenführung der Kontaktierung aller Solareinheiten auf einer oder mehreren, gemeinsam verstellten Tragstruktur(en) sowie deren zentrale Ableitung möglich ist.

Die damit erzielbare Unabhängigkeit von der jeweiligen Flächensituation ist ein Novum. Die genannte Erfindung leistet eine in der Elevation einachsige Nachführung, wobei die Nachstellbewegung entsprechend der scheinbaren Bewegung des anvisierten Gestirns nicht mit linearen Stell- und/oder Antriebsgliedern realisiert wird, sondern mit einer motorisch angetriebenen Schwenkeinheit, die besonders für die Erfordernisse für die Verstellung um einen Elevationswinkel optimiert ist. Dadurch wird es möglich, eine Anordnung bereitzustellen, die in allen drei genannten Einsatzgebieten (als Freilandanlage, zur Aufdachmontage oder gebäudeintegriert) verwendet werden kann. Das System ist gerade wegen der möglichst universellen Einsetzbarkeit verhältnismäßig einfach bzw. modular aufgebaut.

Es hat sich als günstig erwiesen, dass die Solarkollektoren oder -reflektoren als Solarpaneele, Photovoltaikmodule, Spiegel od. dgl. ausgebildet sind. Während nach der hier verwendeten Definition Solarkollektoren sowohl Photovoltaikmodule als auch Heißwasserkollektoren umfassen, sollen mit Solarreflektoren alle Arten von Spiegeln umfassen, wie sie insbesondere im Rahmen größerer solarthermischer Anlagen Verwendung finden. Das gemeinsame Ziel all dieser Anlagen ist, dass die einfallende Sonnenstrahlung zur Energiegewinnung nutzbar gemacht werden soll, während gleichzeitig die dazu benötigte Fläche zumindest teilweise zu anderen Zwecken nutzbar sein soll oder gar die bspw. auf Dächern, Türmen, Masten od. dgl. vorhandene, für die Montage nutzbare Fläche übertreffen kann. Damit können bspw. vorhandene Parkplätze, bspw. vor Einkaufszentren, zur Energiegewinnung genutzt werden, wobei als vorteilhafter Nebeneffekt die starke Aufheizung der geparkten Fahrzeuge im Sommer reduziert wird, während im Winter bspw. das Einschneien der geparkten Fahrzeuge vermieden wird und während der Frühjahrs- und Herbststürme Regen und Hagel von den geparkten Fahrzeugen ferngehalten wird.

Wenn, wie die Erfindung weiterhin vorsieht, die Hauptflächen aller auf einer gemeinsamen Tragstruktur montierten Solarkollektoren oder -reflektoren eben ausgebildet sind und in einer gemeinsamen, verstellbaren Ebene liegen, so ist die Windangriffsfläche auf das notwendige Minimum reduziert. Gleichzeitig vereinfacht sich die Tragstruktur wie auch deren Verstellung und Steuerung.

Die Erfindung erlaubt eine Weiterbildung dahingehend, dass die Anschlussflächen des zweiten Anschlusselements über je ein Rohr oder Gestänge mit einer oder mehreren Tragstrukturen verbunden sind. Während über ein zu der Hauptachse koaxiales Rohr die Schwenkbewegung in axialer Richtung weitergeleitet wird, erlaubt ein Gestänge eine Weiterleitung der Schwenkbewegung parallel zu der Hauptebene der Schwenkeinheit, also sozusagen in radialer Richtung.

Indem beide Anschlussflächen von Befestigungsbohrungen lotrecht durchsetzt sind, können daran bspw. großflächig anliegende Rohrflansche daran festgelegt werden, und zwar je nach Passung der verwendeten Schrauben- und Bohrungsdurchmesser jedenfalls reibschlüssig, bei Übergangspassungen darüber hinaus sogar formschlüssig.

Im Rahmen einer ersten Ausführungsform sind die Befestigungsbohrungen durchgehend ausgebildet. Solchenfalls werden immer zwei Rohrflansche oder Anschlusskörper gleichzeitig angeschraubt, nämlich je ein Anschlusskörper pro Anschlussfläche. Solchenfalls können beide Anschlussrohre nur gemeinsam befestigt und auch wieder demontiert werden.

Anders ist es, wenn die Befestigungsbohrungen als Sacklöcher ausgebildet und wechselweise zu den beiden Anschlussflächen hin offen sind. Dann ist die Verbindung eines Anschlussrohrs unabhängig von dem Verbindungszustand des anderen und kann also auch unabhängig von jenem wieder gelöst werden, bspw. zu Montagezwecken.

Bei der zuletzt beschriebenen Ausführungsform sind die Befestigungsbohrungen vorzugsweise mit einem Innengewinde versehen, damit eine Fixierung ohne Kontermuttern möglich ist.

Die Erfindung erlaubt es, dass mehrere Tragstrukturen zwecks gemeinsamer, synchroner Schwenkbewegung untereinander gekoppelt sind, vorzugsweise über ein Gestänge oder über das zweite Anschlusselement der Schwenkeinheit. Dank der einachsigen Nachführung bleiben die Richtungen der Hauptschwenkachsen aller Tragstrukturen stets unverändert und insbesondere koaxial oder parallel zueinander, so dass eine gegenseitige Kopplung vergleichsweise einfach zu bewerkstelligen ist.

Es hat sich als günstig erwiesen, dass eines der beiden ringförmigen Anschlusselemente, insbesondere das die erhabenen Anschlussflächen aufweisende, ringförmige Anschlusselement, an einer Mantelfläche eine rundumlaufende Verzahnung aufweist zur Ankopplung des Drehantriebs.

Bevorzugt handelt es sich hierbei um eine äußere Mantelfläche, welche eine rundumlaufende Verzahnung trägt, zum Verzahnungseingriff mit einer Schnecke. Bevorzugt ist diese Verzahnung durch Bearbeiten des selben ringförmigen Grundkörpers gebildet wie dessen ebene Anschlussfläche, dessen Laufbahn(en) für die Wälzkörper(reihen) und/oder dessen Befestigungsbohrungen, wodurch sich ein Höchstmaß an Präzision erreichen lässt.

Die Erfindung sieht weiterhin vor, dass der Drehantrieb wenigstens einen Motor aufweist, dessen Rotor mit einer Schnecke drehfest gekoppelt oder verbundenen ist, welche mit der Verzahnung des äußeren Anschlusselements kämmt. Es kann sich hierbei um einen Hydraulikmotor oder vorzugsweise um einen Elektromotor handeln. Besonders bewährt haben sich präzise regelbare Motoren, bspw. Schrittmotoren oder lagegeregelte Servomotoren.

Bevorzugt ist die Hauptebene der erfindungsgemäßen Schwenkeinheit vertikal ausgerichtet. Diese Hauptebene ist derart orientiert, dass sie von der Hauptachse HA des neigungsverstellbaren Anlagenteils lotrecht durchsetzt wird, so dass die Schwenkeinheit koaxial zu dieser Hauptachse HA montiert und neben deren Antrieb gleichzeitig auch zur Lagerung des neigbaren Anlagenteils dienen kann.

Bevorzugt ist dasjenige ringförmige Anschlusselement mit einer Verzahnung versehen, welches Befestigungsmittel zum Anschluss an das in seiner Neigung gegenüber der Horizontalen verstellbare Anlagenteil, insbesondere die Trag- und/oder Aufnahmestruktur für Solarkollektoren, aufweist. Da dieses Anschlusselement an beiden Stirnseiten je eine ebene Anschlussfläche aufweist, sollte dieses vorzugsweise verzahnte Anschlusselement an keiner Stirnseite von dem anderen Anschlusselement umgriffen werden. Aufgrund dessen verfügt jedes Anschlusselement nur über eine einzige, dem jeweils anderen Anschlusselement zugewandte Fläche, insbesondere Mantelfläche. In dieser Mantelfläche ist sowohl die Verzahnung des verzahnten Anschlusselements angeordnet wie auch die Wälzlagerung(en) zwischen den beiden Anschlusselementen. Damit in die Verzahnung eine Schnecke eingreifen kann, sollte sie sich an einer Außenmantelfläche befinden; idealerweise befindet sie sich also an der äußeren, konvex gewölbten, dem Spalt zugewandten Mantelfläche des radial innen liegenden Anschlusselements. Vorzugsweise sind die betreffenden Elemente - also die Verzahnung einerseits sowie die Laufbahn(en) für die Wälzlagerung(en) andererseits - durch vorzugsweise spanabhebende Bearbeitung oder Formgebung der selben Mantelfläche eines gemeinsamen Anschlusselements gebildet, vorzugsweise des radial innen liegenden Anschlusselements. Unter "radial innen liegendem Anschlusselement" soll in diesem Zusammenhang dasjenige Anschlusselement verstanden werden, dessen von Befestigungsmitteln, insbesondere -bohrungen, durchsetzte Anschlussfläche sich näher an der Drehachse der Schwenkeinheit befindet als die Anschlussfläche des anderen Anschlusselements. Dies wiederum ist derart zu verstehen, dass sich die Befestigungsmittel, insbesondere -bohrungen, des verzahnten Anschlusselements zum Anschluss an die gegenüber der Horizontalen verstellbare Trag- oder Aufnahmestruktur sich radial innerhalb der Verzahnung des verzahnten Anschlusselements befinden, während sich die Befestigungsmittel, insbesondere -bohrungen, des unverzahnten Anschlusselements zum Anschluss an ein Fundament oder einen sonstigen, ortsfesten Unterbau radial außerhalb der Verzahnung befinden. Dies lässt sich wiederum dadurch realisieren, dass sich wenigstens eine Antriebsschnecke strukturell zwischen den beiden ringförmigen Anschlusselementen befindet, also radial außerhalb des inneren Anschlusselements, aber radial innerhalb des äußeren Anschlusselements. Zur Aufnahme einer solchen Schnecke ist der Spalt in dem betreffenden Bereich erweitert, insbesondere indem das radial äußere Anschlusselement nach außen zurückweicht, um für die Schnecke Platz zu schaffen. Daraus resultiert eine Ausbauchung des äußeren, vorzugsweise ortsfest am Fundament oder sonstigen Untergrund oder -bau fixierten Anschlusselements, dessen Innenseite in dem betreffenden Bereich nicht rotationssymmetrisch zur Hauptachse des Schwenktriebs verläuft.

Falls das verzahnte Anschlusselement an einer Stirnseite von dem unverzahnten Anschlusselement umgriffen werden müsste, so sollte andererseits auch das unverzahnte Anschlusselement an einer Stirnseite von dem verzahnten Anschlusselement umgriffen werden. Mit anderen Worten, falls das unverzahnte Anschlusselement eine querschnittlich im Wesentlichen U-förmige Ringstruktur aufweist, so müsste dies auch für das verzahnte Anschlusselement gelten, und beide wären derart ineinander anzuordnen, dass jeweils der einem U-Schenkel entsprechende Ringabschnitt eines Anschlusselements sich innerhalb der rundum laufenden Vertiefung des jeweils anderen Anschlusselements befindet. Dabei könnten die verschiedenen Abschnitte eines derartigen Rings auch getrennt voneinander hergestellt und erst bei der Montage der Schwenkeinheit drehfest zu einem gemeinsamen Anschlusselement miteinander vereinigt werden, bspw. durch Verschrauben. Ein "ringförmiges Anschlusselement" im Sinne der Erfindung muss also nicht unbedingt aus einem einzigen Teil bestehen, sondern kann aus mehreren Teilen zusammengesetzt werden, welche aber schließlich während des Betriebs eine starre Einheit bilden.

Allen oben beschriebenen Ausführungsformen gemeinsam ist, dass die Lagerung für die Schnecke sich an dem mit einem Fundament oder Unterbau festzulegenden Anschlusselement befindet, mit dem Effekt, dass sich die Schneckenachse während des Betriebs nicht verändert. Im fertigen Zustand der betreffenden Anlage schwenkt also die Schnecke bei einer Verstellung nicht mit, sondern bleibt ortsfest fixiert und dreht sich ausschließlich um die eigene Längsachse. Ähnliches gilt auch für den Antriebsmotor, der ebenfalls an dem orts- und drehfest fixierten Anschlusselement oder einem damit verbundenen Getriebe festgelegt, bspw. angeflanscht ist. Dieser bewegt sich während des Betriebs nicht, sondern ausschließlich sein Rotor dreht sich ggf. um seine Längsachse. Dies hat verschiedene Vorteile: Einerseits ist dabei die Führung von Versorgungs- und/oder Steuerleitungen, wie Elektrokabeln oder Hydraulikleitungen, erleichtert, weil dieselben keiner ständigen Verbiegung ausgesetzt sind; andererseits besteht nicht die Gefahr, dass ein derartiger Motor im Laufe seiner Bewegung andere Bauteile behindern oder kontaktieren oder gar beschädigen könnte. Mehr noch - eine Montage oder Haltestruktur, welche die erfindungsgemäße Schwenkeinheit mit einem Unterbau verbindet, könnte an die ausladende Motorstruktur angepasst werden, bspw. indem an den betreffenden Stellen Ausnehmungen oder gar Durchbrechungen zum Hindurchtritt des Motors vorgesehen sind.

Sofern das radial innen liegende Anschlusselement verdreht werden soll und zu diesem Zweck mit einer Verzahnung an seiner außen liegenden Mantelfläche versehen ist, so muss/müssen die Laufbahn(en) für die Wälzkörperreihe(n) in axialer Richtung (bezogen auf die Drehachse des Schwenktriebs bzw. auf die Hauptachse HA) gegenüber der Verzahnung versetzt sein. In diesem Fall sind sowohl die Wälzkörperlaufbahnen als auch die Verzahnung an einer gemeinsamen Mantelfläche des radial inneren Anschlusselements angeordnet.

Ein weiterer Vorteil der Erfindung besteht darin, dass der Abstand eines Wälzkörpers zu beiden Stirnseiten des zweiten Anschlusselements einen größeren Abstand aufweist als jeweils zu der betreffenden Stirnseite des ersten Anschlusselements. Diese Maßnahme kann dazu beitragen, das Einfüllen der Wälzkörper zu erleichtern, insbesondere über eine Befüllungsöffnung an dem ersten bzw. äußeren Anschlusselement. Solchenfalls können bei Bedarf die Wälzkörper sukzessive ersetzt werden, ggf. sogar ohne Demontage der Gesamtanordnung.

Weitere Vorteile ergeben sich daraus, dass die Verzahnung des äußeren Rings von einem Gehäuse umgriffen ist. Solchenfalls kann das Eindringen von Schmutzpartikeln und damit eine Beschädigung der Verzahnung vermieden werden.

Indem das Gehäuse und/oder der Spalt zwischen den beiden Anschlusselementen abgedichtet und mit einem Schmiermittel gefüllt ist, insbesondere mit einem Schmierfett, lässt sich ein nahezu verschleißfreier Betrieb und damit eine maximale Betriebsdauer erzielen.

Dank der einachsigen Anordnung ist die Längsrichtung der Hauptachse in horizontaler Ausrichtung festgelegt, so dass sich sehr einfache geometrische Verhältnisse ergeben. Die Hauptachse kann wahlweise in Ost-West-Richtung festgelegt sein oder in Nord-Süd-Richtung. Während in ersterem Fall die Ausrichtung der bestrahlungssensitiven Fläche vor allem der Änderung des jahreszeitlichen Höchststandes der Sonne angepasst werden kann, lässt sich diese Fläche mit einer Anordnung nach der letztgenannten Variante vor allem dem scheinbaren, täglichen Lauf der Sonne nachführen.

Die Erfindung sieht weiterhin vor, dass das erste Anschlusselement mittels einer Vielzahl kranzförmig um die Hauptachse verteilt angeordneter, zur Hauptachse paralleler Befestigungsschrauben an einer ortsfest und unbeweglich fixierten Halterung, insbesondere einer Halteplatte, verankert ist, wobei der Zentrumswinkel zwischen benachbarten Befestigungsschrauben gleich oder kleiner ist als 60°, vorzugsweise gleich oder kleiner als 45°, insbesondere gleich oder kleiner als 30°, im Idealfalls sogar gleich oder kleiner als 15°. Damit ergeben sich vergleichsweise kleine Abstände zwischen benachbarten Befestigungsschrauben, was eine hochbelastbare Verbindung zur Folge hat.

Die Halteplatte sollte vertikal ausgerichtet und von der ortsfesten Hauptachse lotrecht durchsetzt sein, damit der Dreh- oder Schwenkbewegung keinerlei Kippbewegungen überlagert sind.

Zur Montage auf einem Fundament, Chassis, Rahmen, Stativ, Dreibein, Pylon oder einer Säule kann die Halteplatte mit wenigstens einem unterseitigen Befestigungselement verbunden sein. Aus Gründen der Statik bzw. des Gleichgewichts sollte sich dieses Befestigungselement vertikal unterhalb der Halteplatte befinden.

Die Erfindung lässt sich dahingehend weiterbilden, dass das Befestigungselement wenigstens eine ebene, horizontale Unterseite aufweist, beispielsweise wenigstens eine horizontale Befestigungsplatte oder Befestigungsschiene. Dort wird die Gewichtskraft der auflastenden Konstruktion flächig in das Fundament oder den sonstigen Unterbau abgeleitet.

Für die Erfindung ist weiterhin charakteristisch, dass die Halteplatte mit wenigstens einer Befestigungsplatte oder -schiene durch ein oder vorzugsweise zwei oder mehrere Verbindungs- und/oder Versteifungselemente mit jeweils mindestens einer von der Halteplatte zu der Befestigungsplatte oder -schiene abwärts geneigt verlaufenden Kante verbunden ist. Damit ergibt sich eine Konstruktion, die sich von der Oberkante oder dem oberen Bereich der vertikalen Halteplatte zu der unterseitigen Befestigungsplatte oder -schiene verbreitert, ähnlich einem auf seiner Basis stehenden Dreieck mit nach oben weisender Spitze. Eine solche Anordnung ist in höchstem Maße stabil, insbesondere beigesteif.

Ferner entspricht es der Lehre der Erfindung, dass eine die Tragstruktur tragende Schwenkeinheit und/oder Lagerung einen Abstand zu der darunter liegenden Oberfläche aufweist, der gleich oder größer ist als die halbe Erstreckung einer Tragstruktur quer zu deren Hauptachse, so dass darunter noch Raum für eine anderweitige Nutzung verbleibt, insbesondere als Parkplatz. Je nach Art der Nutzung sollte der Abstand die halbe Erstreckung der Tragstruktur quer zu deren Hauptachse um ein Maß übertreffen, welches der für die Nutzung benötigten Maximalhöhe entspricht. Beispielweise sollte dieses Maß bei einer Nutzung der darunter liegenden Fläche als Parkplatz für PKW wenigstens etwa 2,5 m betragen, damit selbst bei einer maximal steil gestellten Tragstruktur darunter noch PKW - ggf. mit Dachgepäckträgern - ausreichenden Platz vorfinden.

Die Erfindung umfasst darüber hinaus eine verstellbare Anlage mit wenigstens einer um eine horizontale Hauptachse einachsig verstellbaren Tragstruktur, beispielsweise zur Aufnahme eines oder mehrerer Solarpaneele oder Photovoltaikmodule, um deren Elevationswinkel zu ändern, beinhaltend bzw. aufweisend wenigstens einen Drehantrieb zur aktiven, rotatorischen Verstellung der Tragstruktur um die horizontale Hauptachse, der als Schwenkeinheit ausgebildet ist mit zwei zueinander konzentrischen Ringen, welche aneinander gelagert und zur gegenseitigen Relatiwerstellung mit mindestens einem Motor oder Antrieb gekoppelt sind oder koppelbar sind, wobei ein erster dieser Ringe der ortsfesten Fixierung an einem Sockel, Ständer oder dergleichen dient und ein zweiter dieser Ringe mit der Tragstruktur drehfest gekoppelt wird, wobei der zweite dieser Ringe zwei Anschlussflächen an einander gegenüber liegenden Stirnseiten aufweist, welche gegenüber dem ersten dieser Ringe in axialer Richtung, insbesondere entlang der Hauptachse, parallel versetzt sind.

Im Folgenden wird insbesondere auf Ausführungsformen der Erfindung eingegangen, welche einen mit planaren Elementen oder Flächen bestückten Gestellrahmen (Aufnahmestruktur) verwenden, wobei diese über Koppelung mit einer durch einen Schwenkantrieb in Drehung versetzte Tragstruktur in Elevationsrichtung geschwenkt werden kann. Dabei sollen zwei grundlegende Ausprägungen der Erfindung voneinander unterschieden werden, die aber dennoch auf den selben, oben genannten Prinzipien basieren und daher jeweils mit den gleichen, modularen Grundelementen realisierbar sind:

Die erste Ausprägung soll im Folgenden als "Leichte Struktur" bezeichnet werden und sieht die Anwendung der soeben genannten Grundelemente in einem System vor, welches durch ein sehr leichtes Gestell, in der Regel aus Leichtmetall, Aluminium oder von ähnlich leichter Gestaltung, getragen wird. Dieses Gestell bildet den Unterbau und ist häufig auch als fachwerkähnliche Tragstruktur ausgeführt. Auf diesem leichten Gestell angebracht und von diesem leichten Gestell auf eine zumeist vergleichsweise geringe Höhe H gebracht ist mindestens eine Schwenkeinheit montiert, welcher die Drehung wenigstens einer Tragstruktur um eine Hauptachse zwecks Realisierung einer Elevationsbewegung obliegt.

Die zweite Ausprägung mit der im Folgenden verwendeten Bezeichnung: "Massive Struktur" sieht die Anwendung der oben genannten Grundelemente in einem System vor, welches von wenigstens einem Rohr oder einer massiven Säule oder Stütze, in der Regel einem Pylon aus Stahl, Stahlbeton, rohrförmigem Gussstahl oder dergleichen ähnlich massive Gestaltung, getragen wird. Diese Säule bzw. dieser Pylon, welcher in dessen Inneren entweder als Hohlkörper (Rohr) oder als Vollmaterial ausgeführt ist, bildet den Unterbau und kann mittig, als auch außermittig unter der zu tragenden Aufnahmestruktur angeordnet sein. Auf dieser Säule / Stütze bzw. auf diesem Pylon angebracht und von dieser auf eine mittlere bis große Höhe H gebracht ist mindestens eine Schwenkeinheit montiert, welche die Drehung einer Tragstruktur um eine Hauptachse zwecks Realisierung einer Elevationsbewegung bewirkt. Benötigt wird bei dieser Ausprägung beispielsweise nur eine einzige Säule, rohrförmige Stütze oder ein Pylon (umgangssprachlich: Stütze) für eine tragende Aufnahmestruktur, die das Tragen einer Gesamtfläche in der Größenordnung von bis zu 400 m² (definiert durch die Fläche F = B * T, bei einer Breite B und einer Tiefe T) ermöglicht. Allgemein gilt: Je massiver die Stütze ausgebildet wird, desto mehr Masse darf die Aufnahmestruktur problemlos tragen, ohne dass deren Stabilisierung Probleme bereitet oder die Schwenkbarkeit der Aufnahmestruktur und der daran befestigten Elemente oder Module zum Erliegen kommt.

Ein erster Vorteil der Erfindung, beispielsweise realisiert bei der leichten Struktur, besteht in folgendem: Aufdach- beziehungsweise Indach-Anlagenlösungen auf Gebäuden, insbesondere auf Flachdächern, sind laut heutigem Stand der Technik stets mit dem Gebäude verbunden, in der Regel kraftschlüssig, etwa geschraubt oder gedübelt oder über Klicksysteme integriert. Mit der Erfindung lassen bei denen Aufdach- beziehungsweise Indach-Anlagenlösungen durch ihr Eigengewicht, ggfs. mit zusätzlichen Beschwerungsgewichten mit ausreichender Stabilität positionieren. Hierbei ist es demnach nicht mehr nötig, tiefe Installationen in der Dachfläche zu gründen, wie etwa Bohrungen für Verschraubungen, anzubringen, denn über einfach befestigbare Fußschienen können mehrere planare Elemente (Solarpaneele oder PV-Module) geeignet nebeneinander und vor Allem auch hintereinander positioniert und mittels Gewichten beschwert werden. Beispielweise können dazu Beton(form)steine als Gewicht herangezogen werden, oder auch Sandsäcke, oder metallische Formkörper, welche sich so über die Fußschienen des Unterbaus legen, dass diese formschlüssig in Position gehalten werden und somit unverrutschbar befestig sind. Die Anordnung wird durch das Eigengewicht und die geeignete Einstellung an Windlasten sich selbst tragen. Langfristig wird somit ein System bereitgestellt, welches durch die minimal eindringende Art der Montage sehr viel weniger Anlass für etwaige späte Bauwerksschäden bietet, wie ansonsten beispielsweise infolge durch nachhaltiges Einsickern von Feuchtigkeit in das Bauwerk zu befürchten wäre.

Ferner können bisherige Freiflächen, etwa Parkplätze, Wiesen- und Feldflächen, Freiflächen vor Geschäften und Supermärkten, etc., durch die Erfindung nachgerüstet werden. Die Säulen, Pylone, Stützen od. dgl. können in den bisherigen Frei- oder Grünstreifen platziert werden. Daher gibt es keinen nennenswerten Platzverlust an nutzbarer Fläche, oder selbiger wird jedenfalls minimiert, weil - beispielsweise auf Parkplatzflächen - stets Bereiche existieren, die von vornherein nicht asphaltiert oder bepflastert werden, etwa um eine Beabstandung nebeneinander liegender Parkreihen zu realisieren; in eben diesen nicht asphaltierten oder bepflasterten Frei- oder Grünstreifen können die Säulen, Pylone, Stützen aufgestellt werden.

Die das System tragende Aufnahmestruktur kann auf einem direkt mittig und zentral angebrachten Unterbau aufgeständert werden, wobei der horizontale Abstand Δ zwischen der Mitte der Aufnahmestruktur bzw. deren Schwerpunkt und einem bspw. säulenförmigen Unterbau dann etwa gleich Null ist: Δ = 0. Wenn jedoch der Unterbau um einen Abstand Δ ≠ 0 von dem Schwerpunkt der Aufnahmestruktur versetzt angeordnet ist, so mag daraus zwar eine gewisse Asymmetrie resultieren; diese kann aber in Grenzen gehalten oder ggf. durch Gegengewichte kompensiert werden. Diese variable Nutzbarkeit des vorhandenen Platzangebotes ist in der Praxis ein immenser Vorteil, da bestehende Flächen gut und möglichst zweckerhaltend nachgerüstet werden können.

Die mit der Erfindung ausgestattete Anlage kann im Rahmen einer multifunktionalen Nutzung Schutz vor Wind und Wetter bieten. Im Sommer kann die Anlage, beispielsweise wenn die Anlagen auf Freiflächen in der Nähe von Supermärkten aufgestellt wird, etwa auf einem Parkplatz für Fahrzeuge, mit den ausladenden flächigen Solarmodulen als Sonnenschutz für darunter parkende Fahrzeuge verwendet werden. Da die ausladenden flächigen Solarmodule stets so gestellt werden, dass Sie die Sonnenenergie im Rahmen der Verstellung möglichst optimal maximal absorbieren/aufnehmen, existiert stets ein großflächiger Verschattungsbereich (VB) auf dem Boden, bzw. auf der durch Oberkante (OK) des Geländes oder des Gebäudes. Fahrzeuge oder andere Gerätschaften, welche in diesem Verschattungsbereich geparkt, abgestellt oder positioniert werden, sind vor starker Erwärmung/ Aufheizung durch Sonnenenergie geschützt. Im Herbst- und Winter sind die geparkten Fahrzeuge unter den ausladenden flächigen Solarmodulen vor Wind und Wetter, insbesondere vor Niederschlag, Regen, Schnee, Schauer, stets besser geschützt als Fahrzeuge, welche komplett im Freien parken.

Bei Verwendung der mit der Erfindung ausgestatteten Anlage auf landwirtschaftlichen Nutzflächen wird dadurch, dass keine komplette Abschattung der Sonne stattfindet, starke Sonneneinstrahlung nur teilweise durchgelassen. Unterhalb des erfindungsgemäßen Solar-Trackers ist landwirtschaftlicher Anbau möglich. Insbesondere bei Einsatz der mit der Erfindung ausgestatteten Anlage in ariden Gebieten oder wüstennahen Gebieten kann dadurch Landwirtschaft oftmals überhaupt erst ermöglicht werden, indem die Sonnenhitze von dortigen Pflanzen ferngehalten wird und also die Wasserverdunstung reduziert wird.

Teile, vor allem nicht bewegte Teile des Unterbaus der mit der Erfindung ausgestatteten Anlage, können multifunktional genutzt werden, etwa als Informations- oder Werbeträger, etwa wenn die Anlage entlang von Fahrbahnen, oder in der Nähe von Supermärkten aufgestellt wird, oder als Halterungen für eine Beleuchtungseinrichtung. Dies hat bspw. Vorteile entlang von Wegen oder Fahrbahnen oder auf Parkplätzen, welche nachts auszuleuchten sind. In diesem Fall kann man sich teure Lampen wie bspw. Peitschenleuchten od. dgl. einsparen, indem die Beleuchtungseinrichtung direkt an dem Unterbau befestigt wird, bspw. in der unteren Höhenebene zwischen OK G.o.G bis H.

Die Energieausbeute der mit der Erfindung ausgestatteten Anlage wird maximiert, weil der Nachführungsbereich bei Verwendung eines Schwenktriebes zur Nachführung in Elevation wesentlich größer ist als bei Verwendung eines linearen Stell- und Antriebsgliedes zur Abbildung der Elevationsbewegung. Der durch die erfindungsgemäße Anordnung einstellbare Elevationswinkel Ω kann theoretisch jeden beliebigen Wert zwischen 0° und 360° einnehmen. In der Praxis wird dieser Winkel tatsächlich jedoch ausschließlich durch den Platzbedarf der Konstruktion des Unterbaus eingeschränkt. Praktisch beträgt dieser Wert daher betragsmäßig zwischen 0° ≤ |Ω| 90° und absolut zwischen -90° ≤ Ω ≤ +90° und ist somit größer als bei Verwendung eines linearen Stell- und Antriebsgliedes zur Ausführung der Elevationsbewegung.

Nachts ist die aufgeständerte Solaranlage aus Gründen der optimalen Gewichtsverteilung zwecks Einsparung von Halteenergie zumeist in der sogenannten Tischstellung, wobei die Solarfläche horizontal ausgerichtet ist. Ein von der horizontalen Ebene aus gemessener Elevationswinkel Ω beträgt dann exakt 0°. Die gleiche Tischstellung wird aus Sicherheitsgründen dann eingestellt, wenn stürmisches Wetter herrscht, d.h. wenn Windkräfte, die flächig gegen die Solarfläche drücken, einen gewissen Schwellenwert überschreiten. Diese Tischstellung ist im Sinne einer (Default-) Grundeinstellung der aufgeständerten Solaranlage, welche sich die Steuereinheit der Solaranlage prior stets dann wählt, wenn keine exakt definierten Steuersignale zur einachsigen Nachführung des Sonnenstandes anliegen.

Diese Tischstellung wird auch tagsüber dann erreicht, wenn die Sonne im Zenit steht und die Sonnenstrahlen direkt (orthogonal) auf die Solarpaneele auftreffen. Auch dann beträgt der von der horizontalen Ebene aus gemessener Elevationswinkel Ω exakt gleich 0°.

Die Vandalensicherheit der Anlage ist erhöht, da die bewegten bzw. bewegbaren Elemente zur Realisierung der Elevationsbewegung kompakt eingehaust sind und keine sich in die Länge erstreckenden Stäbe oder Streben verwendet werden müssen, wie diese bei linearen Stellgliedern stets vorhanden sind, welche mehr Platz brauchen. Der kompakte und platzsparende Aufbau des Schwenkantriebs, im Gegensatz zur ausladenden und exponierten Konstruktion linearer Stellglieder, ist weniger anfällig gegen Transportverkehr, Warenverkehr, etc. Bei Verwendung der Erfindung beispielsweise in der Form der sog. massiven Struktur auf einem Parkplatzgelände besteht daher nicht die Gefahr, dass parkende oder fahrende Fahrzeuge oder Lastkraftwagen exponierte Teile der mit der Erfindung ausgestatteten Anlage berühren und somit die Funktionsfähigkeit der Anlage an sich gefährden.

Ein weiterer Vorteil, beispielsweise realisiert bei der massiven Struktur, besteht darin, dass der Unterbau einstückig ausgebildet ist, oder aber auch als mehrstückiges Objekt, dessen Einzelteile dann durch formschlüssige Verbindung oder durch kraftschlüssige Verbindung gefügt sind. Auch eine nicht lösbare Verbindung im Sinne des Verlötens oder Verschweißens ist möglich. Wenn der Unterbau in Form einer Stütze, Säule oder eines Pylons ausgebildet ist, so kann dieser aus mehreren Einzelteilen bestehen, wobei ein oberer Teil des Pylons gegenüber dem unteren Teil des Pylons durch ein Gelenk verkippbar ausgebildet sein kann. Der daraus resultierende Vorteil ist die vereinfachte Art und Weise der Aufständerung: Einzelteile können leichter und separat an Ort und Stelle der Anlagenmontage transportiert und dort zusammengefügt werden. Ferner wird zum Aufständern des Pylons bzw. der Gesamtanlage kein schweres Montagegerät wie etwa ein Autokran benötigt, da die Fixierung des unteren Teil des Pylons durch die Verankerung im Boden geschehen kann und somit nur noch ein geeignetes Mittel, beispielsweise ein Flaschenzug, zum Durchführen der Klappung um das Gelenk im Pylon, eingesetzt werden muss. Dies spart in der Praxis Zeit und Geld.

Nach Maßgabe der Erfindung können einige wenige (Minimum: ein Solarpanel oder PV-Modul) bis sehr viele (Beispiel: Bis zu etwa bis zu einhundert oder sogar mehr dieser einzelnen Solarpaneele oder PV-Module) Solarkollektoren durch nur eine Schwenkeinheit in Elevationsrichtung verstellt werden. Die Verbindung der einzelnen Tragstrukturen in axialer Richtung durch dazu koaxiale oder parallele, dreh- oder torsionsfeste Rohre erfolgen sowie in dazu lotrechter Richtung durch horizontal orientierte Schubstangen, welche mittels jeweils einem Gelenk an den zu schwenkenden Tragstrukturen angelenkt sind, derart, dass durch die motorische Betätigung eines Schwenktriebs, welcher in der Regel etwa in der geometrischen Mitte des Solarpaneelfeldes angeordnet ist, die Schwenkbewegung aller einzelnen Solarpaneele oder PV-Module vollzogen wird.

Ein Pylon oder eine Säule kann sowohl mit einem runden als auch mit einem mehreckigen Querschnitt ausgeführt sein, denn die Querschnittsform des Pylons oder der Säule ist in der Regel nicht maßgeblich für die Wirkung der Erfindung.

Weitere Vorteile ergeben sich bei der Installation der erfindungsgemäßen Anlage auf Gebäuden, insbesondere auf Gebäudedächern. Dort können sich einige wenige Solarpaneele zur Aufnahme von Sonnenenergie befinden oder gar ganze Solarpaneelfelder, bestehend aus mehreren gleichsinnig orientierten Solarpanelen oder PV-Modulen.

Ein zusätzlicher Vorteil wird bei Verwendung einer erfindungsgemäßen Anlage zur Nachrüstung auf ausreichend stabilen Dächern ersichtlich, bspw. bei Flachdächern oder flachen Gebäudeflächen, welche normalerweise nach bisheriger Technik mit fest installierten Solaranlagen bebaut werden. Hierzu bietet sich vor Allem die Leichte Struktur an, sofern die Höhe H ausreichend hoch gewählt wird, wobei der Einsatz der Massiven Struktur bei ausreichender Tragfähigkeit des Gebäudes nicht prinzipiell ausgeschlossen ist. Die auf dem Dach vorhandene Freifläche wird dabei in mehreren, mindestens zwei, Höhenebenen nutzbar. In der ersten Ebene, etwa in der Höhe zwischen OK G.o.G bis H, gemeint ist also die Fläche des Verschattungsbereichs VB der Anlage, können herkömmliche Gebäudeinstallationen, wie TGA, Schutzräume, Abstellflächen, etc. realisiert werden. Die zweite Ebene dient der Nutzbarmachung der Sonnenenergie durch die mit der Erfindung ausgestattete Anlage. Diese Art der zeitgleichen und mehrfachen Nutzbarmachung von Flächen erhöht die generelle Raumnutzbarkeit und hilft damit, Kosten zu sparen, beispielsweise weil vorhandene Flächen effizienter genutzt werden.

Die Steuerimpulse an die einachsige Verstelleinrichtung zur Realisierung der Elevationsbewegung, also die Drehung einer Tragstruktur um eine Hauptachse, werden durch eine separate Steuereinrichtung, insbesondere eine elektronische Steuereinrichtung, erzeugt.

Die mit der Erfindung ausgestattete Anlage kann als Solartankstelle für Elektrofahrzeuge genutzt werden, wenn eine Kopplungsmöglichkeit des Elektrofahrzeuges an den tragenden Elementen der Gesamtanlage, bspw. dem Unterbau, vorhanden ist, so dass eine elektrische Verbindung zu einem Verbraucher, beispielsweise einem elektromotorisch betriebenen Fahrzeug, hergestellt werden kann. Dies ist besonders dann vorteilhaft, wenn sich die erfindungsgemäße Solaranlage auf einem Parkplatz befindet, bspw. vor einem Supermarkt. Dann können die bspw. zum Einkaufen benutzten Elektrofahrzeuge sofort für die Rückfahrt nach Hause wieder aufgeladen werden, insbesondere wenn die Kopplungsmöglichkeit eine Schnelllade-Funktionalität besitzt.

Weiterhin kann in Fußnähe oder in Bodennähe der mit der Erfindung ausgestatteten Anlage wenigstens ein Energiespeicher an- oder untergebracht sein, welcher Zellen oder Module zur (Zwischen-) Speicherung der über Solarpaneele aufgenommenen Energie beinhaltet. Es kann sich dabei um Akkumulatoren oder aufladbare Batteriezellen handeln, aber auch um alle erdenklich anderen derartige Zellen oder Module zur elektrischen oder chemischen Energiespeicherung. Solche Zellen oder Module sind in freigehaltenen Bereichen, sogenannten Kammern, in der Säule oder dem Pylon der mit der Erfindung ausgestattete Anlage, insbesondere im Unterbau einer Tragstruktur, lokalisiert; sie können auch in einem bodennahen Bereich, oder im Boden selbst, unterhalb der mit der Erfindung ausgestattete Anlage angeordnet sein, oder in einem nahen Gebäude.

Ein solcher Energiespeicher bietet die Möglichkeit, dass die gespeicherte Energie auch in Zeiten abgerufen werden kann, wenn keine Sonne scheint, also bspw. nachts.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: eine erfindungsgemäße, einachsig mittels Schwenktrieb in Elevationsrichtung nachgeführte Solaranlage in schematischer Seitenansicht, beispielhaft dargestellt in drei verschiedenen Positionen, nämlich vormittags (Position a), mittags (Position b) und nachmittags (Position c), wobei der Winkel der Nachführung in Elevationsrichtung jeweils vom Sonnenstand und der Tageszeit abhängig ist;
- Fig. 2, 2a: eine Draufsicht auf eine Freifläche, beispielsweise einen Parkplatz, worauf mehrere erfindungsgemäße Solaranlagen installiert sind, in schematische Darstellung;
- Fig. 3: eine detailliertere Darstellung der Solaranlage nach Fig. 1 in einer perspektivischen Ansicht;
- Fig. 4: einen Ausschnitt aus Fig.3, mit dem oberen Teil des Unterbaus und der dortigen Schwenkeinheit;
- Fig.5: den Unterbau einer abgewandelten Ausführungsform der Erfindung, teilweise abgebrochen;
- Fig. 6: eine wiederum abgewandelte Ausführungsform der Erfindung in einer etwa der Fig. 3 entsprechenden Ansicht, teilweise abgebrochen;
- Fig. 7a, 7b: verschiedene Ausführungsformen der Erfindung, wobei die Zusammenschaltung mehrerer Tragstrukturen in perspektivischer Darstellung wiedergegeben ist;
- Fig. 8: eine abermals veränderte Ausführungsform der Erfindung in einer perspektivischen Ansicht schräg von oben, wobei die Umrisse der Solarkollektoren nur angedeutet sind;
- Fig. 9a: eine wiederum geänderte Ausführungsform einer erfindungsgemäßen Tragstruktur in einer perspektivischen Ansicht, mit einer mehrteiligen, fachwerkähnlichen Aufständerungsstruktur, die durch mehrere Beschwerungselement fixiert ist;

- Fig.9b: ein in Fig. 9a verwendetes Beschwerungselement in vergrößertem Zustand;
- Fig. 9c: ein perspektivische Darstellung eines durch Zusammenschaltung mehrerer Tragstrukturen nach Fig. 9a gebildeten Solarfeldes, wobei mehrere Solarpaneele vor- und nebeneinander aufgereiht sind;
- Fig. 10a-10d: eine nochmals abgewandelte Ausführungsform der Erfindung in verschiedenen Ansichten und Positionen; sowie
- Fig. 10e, 10f: eine letzte Ausführungsform der Erfindung in unterschiedlichen Ansichten und Positionen.

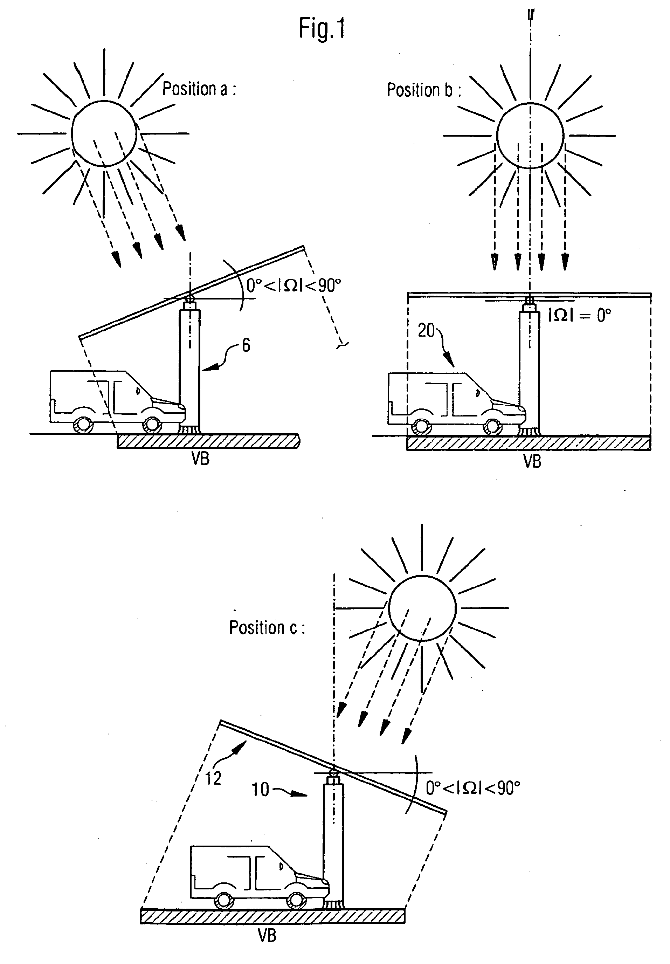

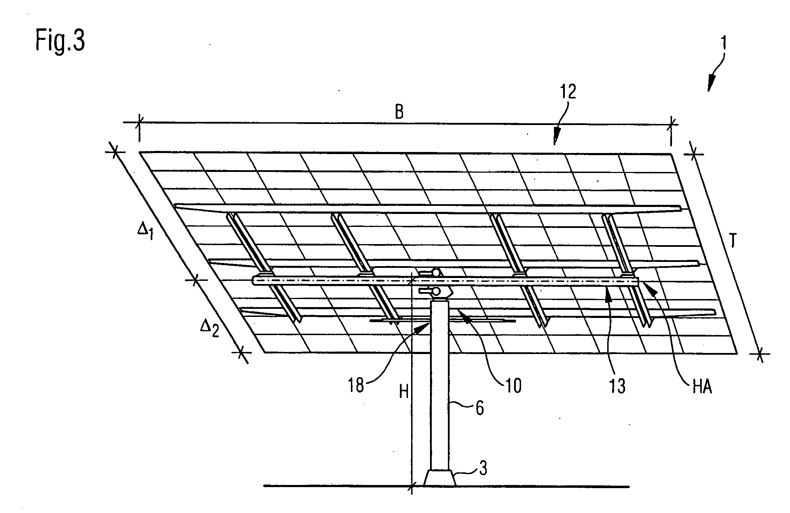

Fig. 1 und 3 zeigt eine Solaranlage 1. Eine Aufnahmestruktur 12 für flächige Solarkollektoren 2 ist mittels eines Schwenktriebs 10 auf einer Säule 6 als Unterbau abgestützt, deren Fußelement 3 bspw. im Boden verankert ist. In Fig. 1 verläuft die Hauptachse HA der Schwenkeinheit 10 lotrecht zur Papierebene. In der Papierebene ist dort der jeweilige Elevationswinkel Ω aufgetragen, also derjenige Winkel, welchen die geneigte Solarfläche mit der Horizontalen einschließt.

Die aufgeständerte Solarfläche wird vermittels der Schwenkeinheit 10 von einer Steuerung möglichst derart nachgeführt, dass sie in der Regel ständig rechtwinklig zu den auftreffenden Sonnenstrahlen ausgerichtet bleibt.

Wie Position a zeigt, ist demzufolge der Elevationswinkel Ω im dargestellten Beispiel vormittags größer als 90°, mit abnehmender Tendenz; mittags, in der sog. Tischstellung, ist der Elevationswinkel Ω gleich 0°, und nachmittags nimmt er negative Werte an.

In Fig. 1 dargestellt ist ferner der jeweils resultierende Verschattungsbereich VB, der im Laufe des Tages mit dem Sonnenstand wandert, infolge der erfindungsgemäßen Nachführung aber hinsichtlich seiner Erstreckung ein Mindestmaß nicht unterschreitet, welches durch die Tiefe T (vgl. Fig. 3) des mit der Aufnahmestruktur 12 aufgeständerten Solarpaneelfeldes 2 definiert ist, und somit über den ganzen Tag hinweg Schatten spendet.

In Fig. 1 gut sichtbar sind auch die Nutzungsmöglichkeiten, die sich bei entsprechend großer Höhe H des säulenförmigen Unterbaus 6 ergeben, etwa die Nutzung der Fläche unterhalb der aufgeständerten Solarfläche als schattiger oder teilverschatteter Parkplatz für parkende Fahrzeuge 20.

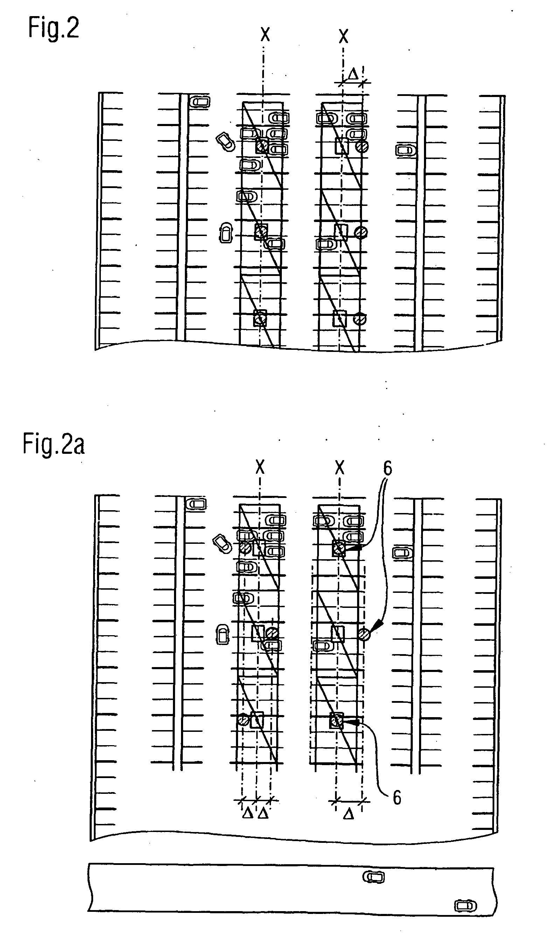

Fig. 2 sowie Fig. 2a zeigen eine Freifläche in Form eines Parkplatzes in der Draufsicht, zusammen mit mehreren erfindungsgemäßen Solar-Aufständerungen 1 in schematische Darstellung. Mit schraffierten Kreisen (nicht maßstäblich dargestellt) sind mögliche Standorte der Sockel 6 von erfindungsgemäßen Solar-Aufständerungen 1 dargestellt.

Die betreffende Stütze 6, Säule 6 oder Pylon 6 ist von einer rechteckigen Fläche umgeben, die schematisch die aufgeständerte Solarpaneel-Fläche mit den Ausmaßen B*T zeigt. Es ist sichtbar, dass jede Stütze 6, Säule 6 oder Pylon 6 nicht stets unterhalb des geometrischen Schwerpunkts der aufgeständerten Fläche stehen muss, sondern auch außermittig stehen kann, sofern das vorhandene Platzangebot dies empfiehlt oder vorgibt. Diese Außermittigkeit wird beispielhaft jeweils durch einen Abstand Δ charakterisiert, welcher unterschiedliche Beträge annehmen kann.

Fig. 3 zeigt die Solar-Aufständerung 1 aus Fig. 1 in perspektivischer Ansicht; man erkennt insbesondere die querschnittlich runde Säule 6; welche jedoch in einer weiteren Ausgestaltung der Erfindung auch mit einem recht- oder mehreckigen Querschnitt ausgeführt sein kann. Die dargestellte Solaranlage 1 beinhaltet eine Matrix mit etwa zehn mal elf, auf der Aufnahmestruktur 12 angebrachten Solarpaneelen (PV-Paneele, PV-Module) 2. Die Aufnahmestruktur 12 ihrerseits ist über eine Tragstruktur 13 mit dem verdrehbaren Teil der Schwenkeinheit 10 verbunden. Die Aufnahmestruktur 12 ist an der Tragstruktur 13 fix befestigt, bspw. mittels vorzugsweise angeschweißter, eckförmiger Befestigungselemente, bspw. Flacheisen oder Winkeln.

Die Hauptachse HA kann direkt durch die Schwenkeinheit 10 gedreht werden.

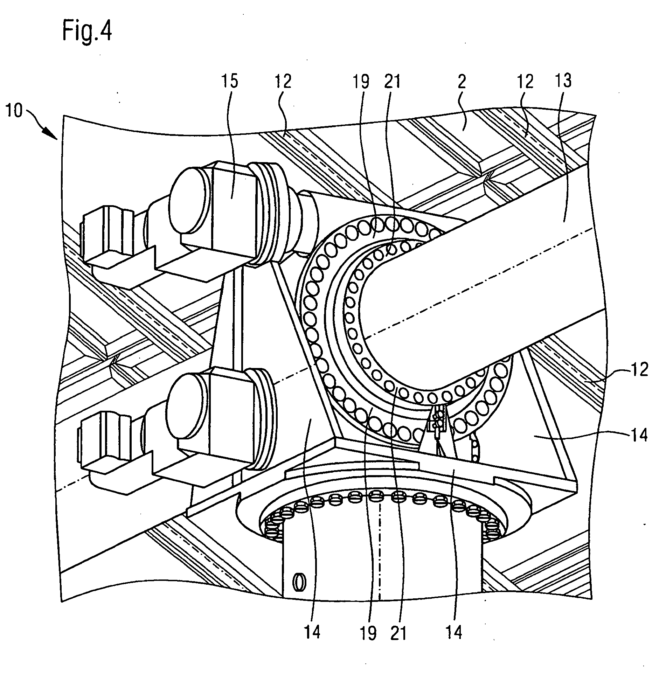

Die Vergrößerung in Fig. 4 zeigt, dass zur verdrehbaren Abstützung der Aufnahmestruktur 12 auf dem Unterbau 6 nur eine einzige Schwenkeinheit 10 notwendig ist, samt wenigstens eines motorischen Antriebs 15. In der Tat ist es in einer weiteren Ausführungsform der Erfindung denkbar, zwei oder mehrere Schwenkeinheiten 10 zu verwenden, welche die zugehörige Tragstruktur 13 entlang der Hauptachse HA zu verstellen geeignet sind.

In Fig. 4 erkennt man die Art und Weise, wie die Schwenkeinheit 10 am Unterbau 6 sowie an der Aufnahmestruktur 12 indirekt befestigt ist. Der unbewegliche Ring 19 der Schwenkeinheit 10 ist über eine Montagevorrichtung 14 an dem Unterbau 6 festgelegt, während der verdrehbare Ring 21 der Schwenkeinheit 10 über die Tragstruktur 13 mit der Aufnahmestruktur 12 verbunden ist. Die beiden, zueinander konzentrischen, ringförmigen Strukturen 19, 21 sind aneinander, insbesondere ineinander, gelagert und zur gegenseitigen Relativerstellung mit mindestens einem Antrieb 15 gekoppelt. Die Koppelung geschieht gehäuseintern. In der Zeichnung sind sogar zwei Antriebe 15 dargestellt, welche gleichzeitig mittels je einer Schnecke mit der Verzahnung an dem verdrehbaren Ring 21 kämmen.

Die Perspektive in Fig. 4 ist aus der Sicht von schräg unten. Im Hintergrund sind die Aufnahmestruktur 12 sowie die auf genanntem System installierten planaren Elemente 2 oder Flächen 2 gut zu erkennen. Es ist hier beispielhaft offenbart, dass die Tragstruktur 13 sich stets entlang der Hauptachse HA orientiert. Die Tragstruktur 13 ist durch die Schwenkeinheit 10 verstellbar. Dasjenige konzentrische Element der Schwenkeinheit 10 mit dem geringeren Durchmesser 19 ist hierbei direkt mit der Tragstruktur 13 verbunden, etwa verschweißt, verschraubt, oder verpresst. Bei der konzentrischen Anordnung ist das Anschlusselement 19 mit dem größeren Durchmesser über eine Wälzlagerung, beispielsweise eine Rollenlagerung oder Kegelrollenlagerung, oder aber zumeist über eine Kugellagerung, gegenüber der ringförmigen Struktur 21 mit dem geringeren Durchmesser verdrehbar 19 gelagert. Beide konzentrischen Ringe 19, 21 sind also stets gegeneinander verdrehbar gelagert. Die Realisierung der Relativverstellung dieser konzentrischen Ringe 19, 21 untereinander erfolgt durch mindestens einen Antrieb 15, hier sogar über zwei Antriebe 15. Diese Antriebselemente 15 treiben beispielsweise über eine im Gehäuse der Schwenkeinheit 10 positionierte Schnecke den verzahnten Ring an. Der Unterbau 6 ist fix mit der Montagevorrichtung 14 verbunden, bspw. über eine Vielzahl von Schrauben.

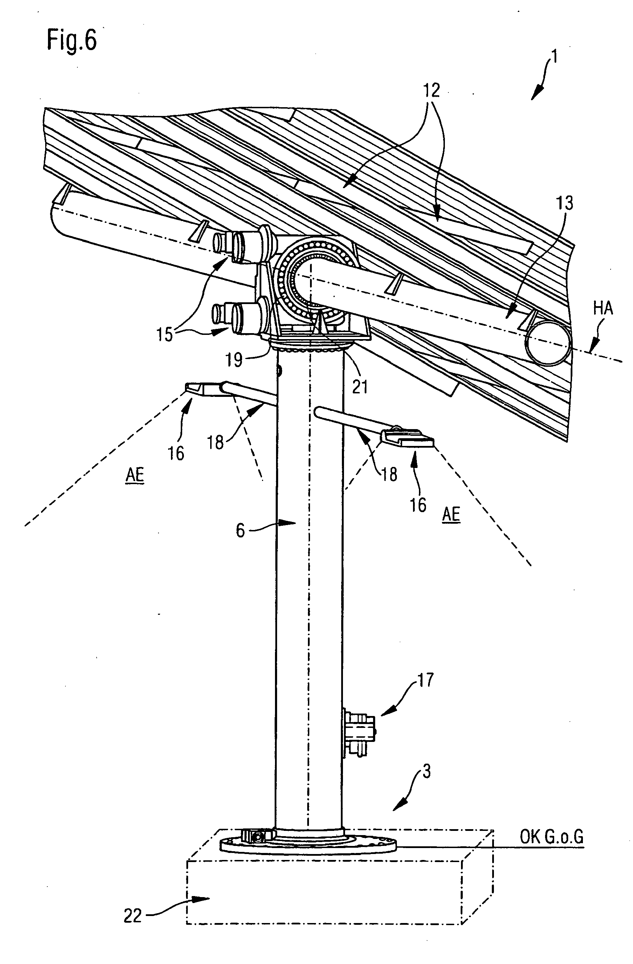

Fig. 6 zeigt die Säule 6, welche mittels eines Gelenks 23 klappbar gestaltet ist, wobei der obere Teil 6' des Unterbaus 6 gegenüber dem unteren Teil 6" des Unterbaus 6 um eine horizontale Achse verschwenk- bzw. klappbar ist. Der untere Teil 6" ist mit dem Boden, dem Fundament, oder einem Gebäudeteil verbunden. Der obere Teil 6' ist mit der erfindungsgemäßen Schwenkeinheit 10 direkt oder indirekt verbunden. Nach der Aufstellung des Pylons 6 bzw. der Säule 6, oder Stütze 6 werden die beiden Flügel der klappbaren Einrichtung exzentrisch zu der Schwenkachse 28 an mindestens einer Stelle verschraubt 24, sodass ein Zurückklappen unterbunden ist. Es können dazu bevorzugt auch weitere Sicherungsschrauben 27 verwendet werden. Der Bolzen 28 befindet sich in der Mitte des Gelenkes 23, jedoch neben der eigentlichen Säule 6 und ist das verbindende Element dieser Klappvorrichtung; durch die exzentrische Anordnung wird das Hochklappen des oberen Teils 6' samt dem Gelenkflügel ermöglicht, wenn die Schrauben 24, 27 gelöst sind. Weitere Teile dieser Gelenkverbindung 23 sind die an je einer Seite 6', 6" verbundenen Flügel 25 sowie die mit je einem Flügel 25 verbundenen, den Gelenkbolzen 28 ringförmig umgreifenden Scharnierglieder 26, welche in Längsrichtung des Gelenkbolzens 28 hintereinander bzw. versetzt angeordnet sind.

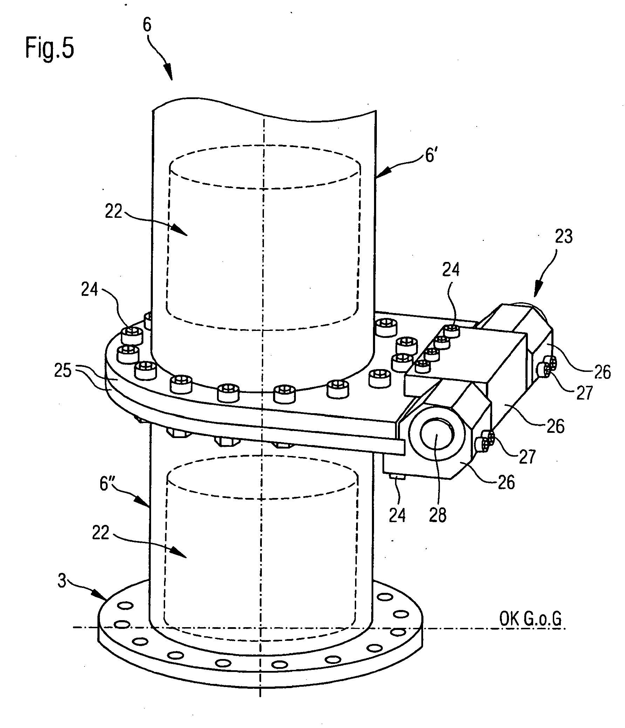

Wie Fig. 5 weiter zeigt, kann der Fußbereich 3 auf dem Gebäude oder auf dem Gelände, insbesondere OK G. o G., fest montiert werden, beispielsweise durch Verschraubung mit dem Boden der dem Fundament oder einer massiven Platte; daran wird die Säule 6 oder der sonstige Unterbau befestigt. Gestrichelt dargestellt sind Kammern 22, welche jeweils separaten Stauraum/Platz zur Aufbewahrung, beispielsweise für Energiequellen oder Energiemodule, bilden, und bspw. bei Aufklappen der Gelenkverbindung 23 zugänglich sind, und/oder über seitliche Türen an der Säule 6,6',6".

Insbesondere beschreibt Fig. 6 beispielhaft, dass die oben genannten Kammern 22 auch unter dem Fußbereich 3 liegen können, beispielsweise im Boden, oder innerhalb eines Gebäudeteils, falls der Unterbau 6 auf einem Gebäudeteil installiert wird. Diese Kammern 22 liegen zwar vorzugsweise im Inneren der Säule (siehe Fig. 5), können in speziellen Ausnahmefällen jedoch auch unterhalb der Bodenplatte der Säule 6 liegen, sofern die Säule dann noch ausreichend vom Fundament getragen wird.

Fig. 6 zeigt eine gegenüber Fig. 3 dahingehend abgewandelte Ausführungsform der Erfindung, dass an der Säule 6 wenigstens eine Befestigungsvorrichtung 18 bspw. für Leuchten od. dgl. angeordnet ist. Diese Befestigungsvorrichtung 18 kann bspw. zwei ausladende Kragarme aufweisen, an welchen beispielsweise Werbetafeln oder Beleuchtungseinheiten oder andere Gerätschaften befestigt und in einer Abstandshöhe über dem Grund (OK G. o. G.) gehalten werden können.

An der Befestigungsvorrichtung 18 angebrachte Leuchten 16 ermöglichen eine Ausleuchtung des Bereichs AE unterhalb der Schwenkeinheit 10. Werden diese Leuchtmittel 16 bei Dunkelheit betrieben, so wird dazu die tagsüber mittels der installierten Solarpaneele 2 gesammelte und zwischengespeicherte Sonnenenergie zur Beleuchtung der Fläche unterhalb eingesetzt wird. Der ausgeleuchtete Bereich AE kann einen großen oder kleinen Ausleuchtwinkel annehmen; dies ist abhängig von den eingesetzten Leuchtkörpern 16.

In Fig. 6 ebenso dargestellt ist eine elektrische Kopplungsvorrichtung 17, an welche elektrische Verbraucher angeschlossen werden können, etwa um beispielsweise Elektrofahrzeuge mit Energie zu versorgen.

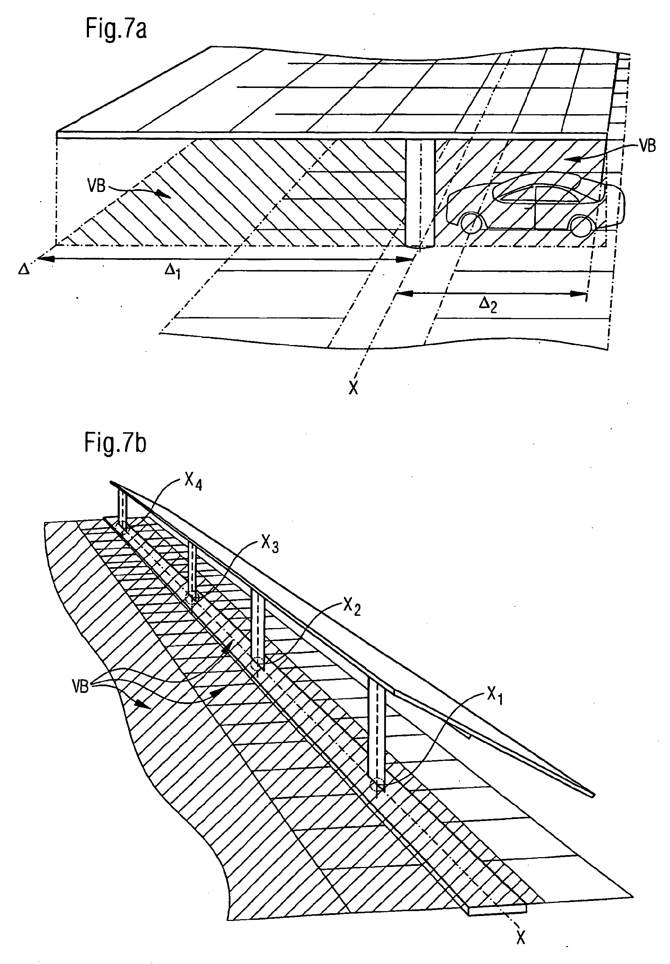

Die Fig. 7a und 7b zeigen beispielhaft den Einsatz mehrerer sogenannter Parkplatz-Solar-Tracker 1 im Sinne der Ausführungsform "massive Struktur" in aneinandergereihter Anordnung. Mehrere dieser Anlagen 1 sind nebeneinander auf einer Freifläche, hier auf einem Parkplatz, aufgestellt. Der Bereich auf Bodenhöhe wird beispielsweise für geparkte Fahrzeuge 20 nutzbar. Bei Dunkelheit ist hier die durch die Aufnahmestruktur 12 aufgeständerte Fläche B*T in der Tischstellung, siehe Fig. 7a. Durch vorgenannte Leuchtanlagen 16 zur Ausleuchtung kann der Parkplatz in der Dunkelheit beleuchtet werden. Dargestellt ist ein Beispiel, bei dem ein Pylon 6 nicht exakt unterhalb der geometrischen Mitte der aufgestellten Fläche positioniert ist, sondern etwas außermittig. Es gilt daher hier |Δ₁| ≠ |Δ₂|. Alle Unterbau-Einheiten 6 sind in diesem Beispiel am Boden befestigt (bei X₁, X₂, X₃, X₄) und befinden sich hierbei auf einer gedachten Linie X. Gemäß Fig. 7b spenden die aufgeständerten Flächen B*T bei Helligkeit Schatten, sodass sich in Bodennähe (OK G. o. G.) dann Verschattungsbereiche VB ergeben.

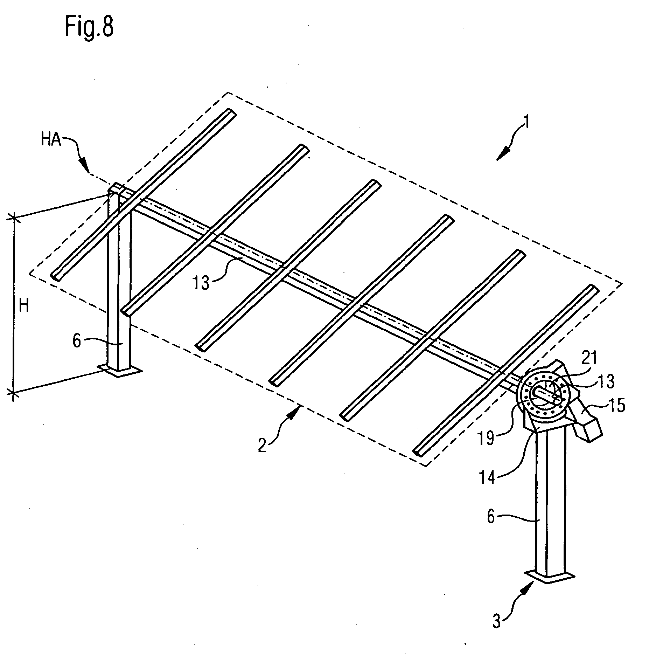

Fig. 8 zeigt beispielhaft und perspektivisch in einer Ansicht schräg von oben eine Solar-Aufständerung 1, wobei die Säule 6 vollständig zum Rand der Solarpaneel-Fläche hin verschoben ist; in diesem Fall ist für eine zuverlässige Abstützung eine zweite Säule 6 vorgesehen, der ersten Säule 6 bezüglich der Mitte der Solarpaneel-Fläche etwa diametral gegenüber liegend, aber auch auf der Hauptachse HA. Dort ist die Tragstruktur 13 ein zweites Mal gelagert, aber vorzugsweise ohne angetriebene Schwenkeinheit 10, sondern nur in einer rein passiven (Wälz-) Lagerung.

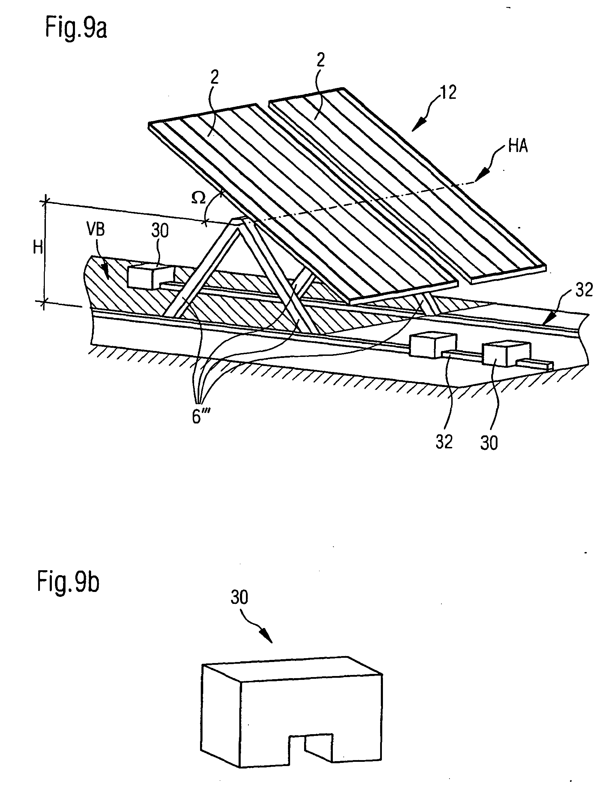

In den Fig. 9a bis 9c dargestellt sind weitere Solar-Aufständerungen, jedoch nach Art der sog. "leichten Struktur". Auch hierbei wird eine erfindungsgemäße Schwenkeinheit 10 verwendet, die zwei zueinander konzentrische, ringförmige Strukturen 19, 21 umfasst, welche gegeneinander verdrehbar gelagert und zur gegenseitigen Relatiwerstellung mit beispielsweise einem Antrieb 15 gekoppelt sind. Diese Schwenkeinheit 10 sitzt auf einem Unterbau 6, beispielsweise in Form eines Gestells mit mehreren Stützen, die jeweils zwei, von unten nach oben zueinander konvergierenden Streben aufweisen. Durch die Schwenkeinheit 10 kann eine Tragstruktur 13 verdreht werden, die vorzugsweise eine langgestreckte Struktur aufweist, bspw. in Form eines Rohrs oder Profils, welche(s) entlang der Hauptachse HA ausgerichtet ist. Dem Erfindungsgedanken folgend, ist die Hauptachse HA stets in etwa horizontal orientiert, und somit in etwa parallel zu der Fläche, auf welcher der Unterbau 6 insgesamt steht. An der Tragstruktur 13 befestigt ist die Aufnahmestruktur 12, welche darauf fix installierte planare Elemente 2 oder Flächen 2, beispielsweise Solarpaneele oder Werbetafeln, tragen kann.

Im Vergleich zur sog. massiven Struktur ist die Höhe H des Unterbaus 6 bei der leichten Struktur nach Fig. 9a bis 9c, welche die erfindungsgemäßen Vorrichtung 10 aufständert, relativ gering. Beispielsweise ist die Höhe H des Unterbaus 6 kleiner als die Größe eines Menschen. In Fig. 9a schematisch angedeutet ist auch der Verschattungsbereich VB, der sich bei ausreichenden Sonnenstrahlverhältnissen unterhalb der aufgeständerten Fläche ergibt.

Die isolierte Darstellung von nur zwei aufgeständerten Elementen 2, sowie die Befestigungsmöglichkeiten der Aufständerung 6"' beziehungsweise deren Fußschienen 32 sind sinngemäß in Fig. 9a und Fig. 9b gezeigt. Dabei ist sowohl der Verschattungsbereich VB zu sehen als auch zwei um den Elevationswinkel Ω aktuell verstellte planare Flächen 2, beispielhaft ausgeführt als Solarpaneele (PV-Paneele; PV-Module). Dargestellt sind ebenfalls die Fußschienen 32, welche nicht an den berührten Bodenbereich angeschraubt werden müssen, sondern darauf nur locker aufliegen und mittels sogenannter Formsteine 30 oder anderen Beschwerungselementen 30 auf der Oberfläche der Gründung festgehalten werden. Diese Formsteine 30 können bspw. eine brückenartige Gestalt aufweisen, etwa nach Art eines umgestürzten "U", wobei die Höhe ihrer unterseitigen Ausnehmung bspw. der Höhe einer Fußschiene 31 entspricht. Es können mehrere dieser Formsteine 30 oder andere Beschwerungselemente 30 verwendet werden. In der Regel werden mehrere solche Formsteine 30 oder Befestigungselemente 30 verwendet, um genügend Positionsstabilität für die Gesamtanlage zu gewährleisten. Der Unterbau 6'" in diesem Beispiel ist ein Gestell oder Ständerwerk, gegebenenfalls auch als Fachwerk denkbar, aus leichten Profilen oder Rohrstrukturen oder sonstigen, langgestreckten Halbzeugen, ideal zur Realisierung von sehr leichten Gesamtanlagen. Die Höhe H des Unterbaus 6 ist vorzugsweise gleich oder kleiner als die Größe eines Menschen, also vorzugsweise gleich oder kleiner als zwei Meter.

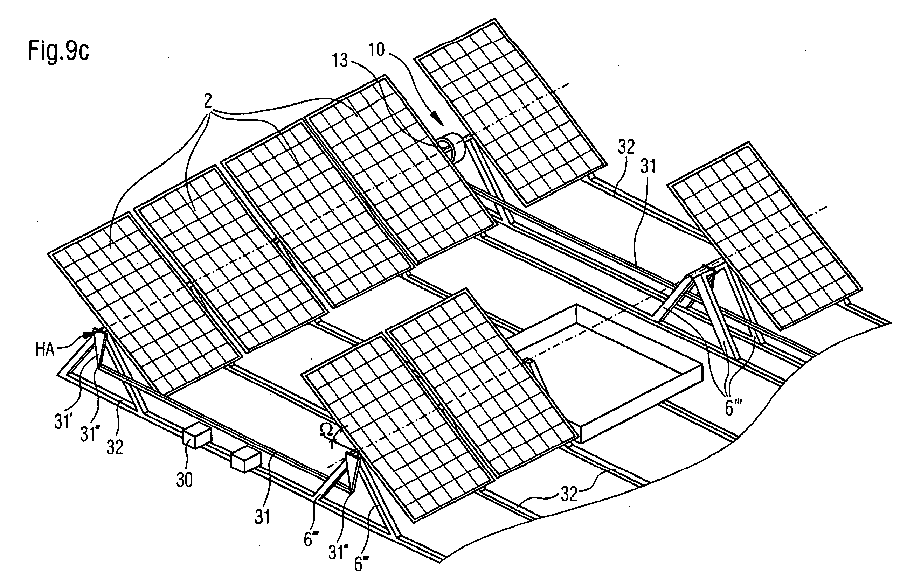

Fig. 9c zeigt als Anwendungsfall der leichten Struktur ein ganzes Solarfeld mit mehreren Solar-Aufständerungen. Inmitten dieses Solarfeldes befindet sich beispielsweise nur eine Schwenkeinheit 10 zu einer Aktivverstellung der planaren Flächen 2 oder Elemente 2 einachsig in Elevation. Die dargestellten planaren Flächen 2 oder Elemente 2, sind hier etwa Solarpaneele (PV-Paneele; PV-Module) und werden durch diese einzige möglichst zentral angeordnete Schwenkeinheit 10 demnach alle gleichsinnig in Elevationsrichtung verstellt. Durch Verdrehung der Tragstruktur 13 um eine Hauptachse HA werden die planaren Flächen 2 oder Elemente 2 verdreht. Wichtig ist in dieser beispielhaften Ausführung, dass alle vorhandenen planaren Flächen 2 oder Elemente 2 stets identisch verstellt werden, sobald die zentral angeordnete Schwenkeinheit 10 eine Verstellung vornimmt. Dies wird dadurch realisiert, dass die jeweiligen planaren Flächen 2 oder Elemente 2 über ein entsprechendes mehrteiliges mechanisches Gestänge 31, 31', 31" miteinander verbunden sind.

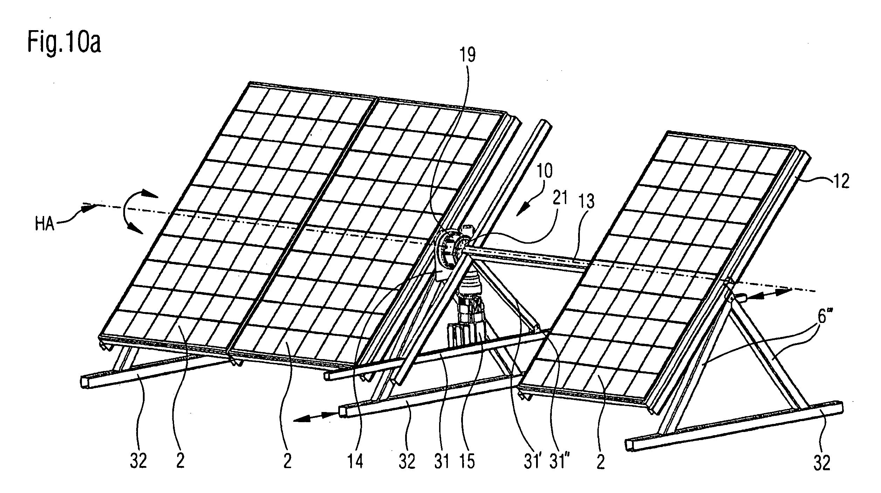

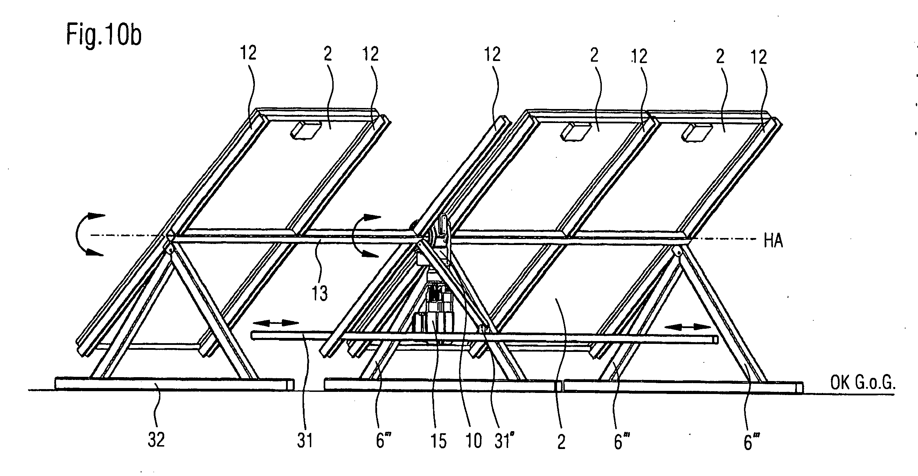

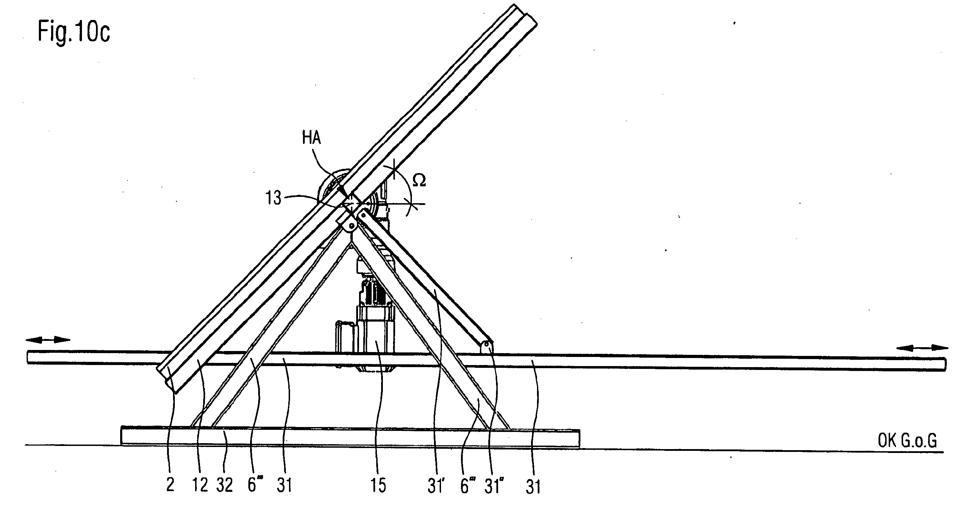

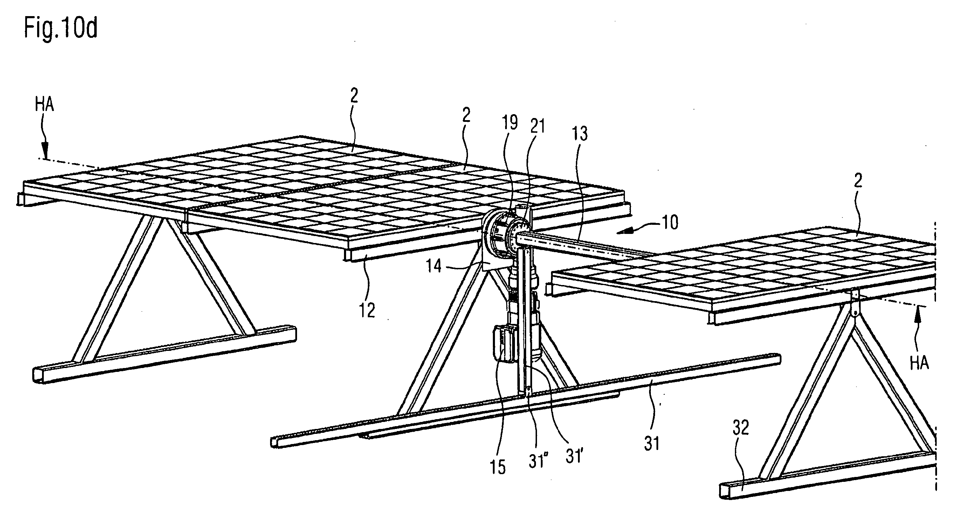

Die Fig. 10a zeigt ebenfalls, dass alle dargestellten, nebeneinander platzierten, planaren Flächen 2 oder Elemente 2 um die gemeinsame, horizontale Hauptachse HA schwenkbar auf einem Unterbau 6 mit mehreren, vorzugsweise zueinander parallelen Fußschienen 32 angeordnet sind.

Den Figuren 10a bis 10f ist ein Solarfeld zu entnehmen, bei welchem mehrere Solarpaneele 2 voreinander und nebeneinander aneinandergereiht sind. Das beispielhafte Solarfeld wird durch eine erfindungsgemäße Schwenkeinheit 10 in Elevation um den Winkel Ω verstellt, wobei die Schwenkeinheit 10 bevorzugt am Unterbau 6 festgelegt ist, bspw. an einer Fußschiene 32. Sichtbar dargestellt ist mindestens eine horizontal orientierte Schubstange 31, welche eine vordere Reihe mit einer dahinter liegenden Reihe von planaren Flächen 2 oder Elemente 2 verbindet. Die Schubstangen 31 sind jeweils über ein Gelenk 31" mit der Aufnahmestruktur 12 gekoppelt. Auf der Aufnahmestruktur 12 ist die planaren Fläche 2 oder das planare Element 2 fix installiert. Durch die Schwenkeinheit 10 verdrehbar ist die Tragstruktur 13, welche stets entlang einer Hauptachse HA orientiert ist. Bei Verstellung der Tragstruktur 13 durch die erfindungsgemäße Vorrichtung 10 wird auch die Aufnahmestruktur 12 gleichsinnig verstellt, da diese Aufnahmestruktur 12 mit der Tragstruktur 13 fix verbunden ist. Dadurch, dass das Gestänge 31' der Schubstange ebenfalls fix mit der Aufnahmestruktur 12 verbunden ist, verstellt sich also auch dieses Gestänge in Elevation und gleichsinnig wie die Verstellung der Tragstruktur 13. Diese Drehbewegung wird sich durch das Gelenk 31", das an der jeweiligen Schubstange 31 befestigt ist, in eine größtenteils translatorische Bewegung der Schubstange 31 in horizontaler Richtung umwandeln. Somit wird die Drehbewegung in Elevation Ω durch eine im Wesentlichen translatorische Bewegung der Schubstange 31 von einer Reihe mehrerer Solarpaneele 2 auf die davor oder dahinterliegende Reihe mehrerer Solarpaneele 2 übertragen. Alle Solarpaneele - oder allgemeiner: alle vorhandenen planaren Flächen 2 oder Elemente 2 - welche auf diese Weise miteinander verbunden sind, sind über den daraus resultierenden Verstellmechanismus direkt oder indirekt mit der Tragstruktur 13 gekoppelt oder verbunden. Bei Verstellung der Tragstruktur 13 infolge einer Betätigung der erfindungsgemäßen Schwenkeinheit 10 werden also alle so verbundenen planaren Flächen 2 oder Elemente 2 um den selben Elevationswinkel Ω verstellt.

Dazu ist zwischen miteinander gekoppelten Tragstrukturen 13 ein Gestänge 31' mit einer Schubstange 31 angeordnet. Sobald die angetriebene Tragstruktur 13 von der Schwenkeinheit 10 in Drehung versetzt wird, wird gleichzeitig auch das Gestänge 31' in Bewegung versetzt. Diese Bewegung wird durch Gelenke 31 ", welche an der jeweiligen Schubstange 31 befestigt sind, in eine größtenteils translatorische Bewegung der Schubstange 31 in horizontaler Richtung umgesetzt und als derartige translatorische Bewegung übertragen. Somit wird die Drehbewegung in Elevation Ω durch eine im Wesentlichen translatorische Bewegung der Schubstange 31 von einer Reihe mehrerer, planarer Flächen 2 oder Elemente 2 auf die davor oder dahinterliegende Reihe ähnlicher Elemente übertragen. Alle vorhandenen planaren Flächen 2 oder Elemente 2, welche auf diese Weise miteinander verbunden sind, sind über den genannten Verstellmechanismus direkt oder indirekt mit der Tragstruktur 13 verbunden. Bei Verstellung der Tragstruktur 13 infolge einer Betätigung der erfindungsgemäßen Schwenkeinheit 10 werden also alle so verbundenen planaren Flächen 2 oder Elemente 2 um den selben Elevationswinkel Ω verstellt.

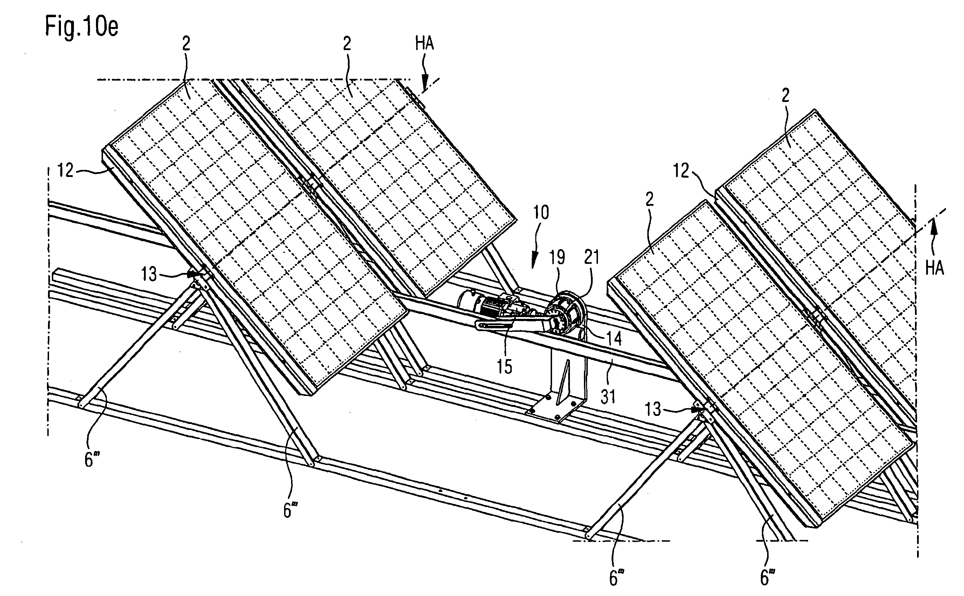

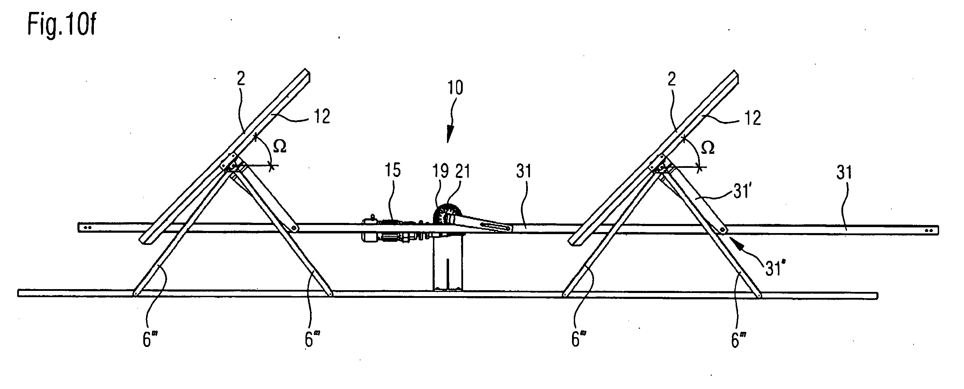

Gemäß Fig. 10e und 10f muss die Schwenkeinheit 10 nicht direkt an einer Tragstruktur 13 befestigt sein, sondern kann auch über ein Gestänge 31 angekoppelt sein.

### Bezugszeichenliste

- 1: Solaranlage
- 2: Solarkollektor
- 3: Fußelement
- 6: Unterbau
- 6': Teil
- 6": Teil
- 6'": Unterbau
- 10: Schwenkeinheit
- 12: Aufnahmestruktur
- 13: Tragstruktur
- 14: Montagevorrichtung
- 15: Antrieb
- 16: Beleuchtungseinrichtung
- 17: Kopplungsvorrichtung
- 18: Befestigungseinrichtung
- 19: Erstes Anschlusselement
- 20: Fahrzeug
- 21: Zweites Anschlusselement
- 22: Kammer
- 23: Gelenk
- 24: Schraubverbindung
- 25: Flansch
- 26: Scharnierglied
- 27: Sicherungsschraube
- 28: Bolzen

- 30: Befestigungselement
- 31: Schubstange
- 31': Gestänge
- 31": Gelenk
- 32: Fußschiene
- AE: Ausgeleuchteter Bereich
- B: Breite
- H: Höhe
- HA: Hauptschwenkachse
- MS: Geometrische Mitte
- OK: Oberkante
- T: Tiefe
- VB: Abschattungsfläche
- X: Verbindungslinie
- Xᵥ: Geometrischer Mittelpunkt
- Δ: Abstand

## Patentansprüche

1. Solaranlage (1) mit wenigstens einer um eine horizontale Hauptachse (HA) einachsig verstellbaren Aufnahmestruktur (12) für Solarkollektoren oder -reflektoren, um diese aufzunehmen und/oder zu tragen, sowie um deren Neigungs- oder Elevationswinkel (Ω) zu ändern, und mit wenigstens einem Drehantrieb zur aktiven, rotatorischen Verstellung der Aufnahmestruktur (12) um die horizontale Hauptachse (HA), der als Schwenkeinheit (10) ausgebildet ist mit zwei zueinander konzentrischen, ringförmigen Anschlusselementen (19, 21), welche aneinander gelagert und zur gegenseitigen Relativverstellung mit mindestens einem Motor (15) gekoppelt oder koppelbar sind, wobei ein erstes Anschlusselement (19) der ortsfesten Fixierung an einem Sockel, Ständer od. dgl. dient und ein zweites Anschlusselement (21) mit der Aufnahmestruktur (12) drehfest gekoppelt wird, wobei das zweite Anschlusselement (21) zwei Anschlussflächen an einander gegenüber liegenden Stirnseiten aufweist, welche gegenüber dem ersten Anschlusselement in der jeweiligen, axialen Richtung erhaben sind, **dadurch gekennzeichnet, dass**
das erste Anschlusselement (19) mittels einer Vielzahl kranzförmig um die Hauptachse (HA) verteilt angeordneter, zur Hauptachse (HA) paralleler Befestigungsschrauben an einer ortsfest und unbeweglich fixierten Halterung (14), insbesondere einer Halteplatte, verankert ist, wobei der Zentrumswinkel zwischen benachbarten Befestigungsschrauben gleich oder kleiner ist als 60°, vorzugsweise gleich oder kleiner als 45°, insbesondere gleich oder kleiner als 30°.

2. Anlage nach Anspruch 1, **dadurch gekennzeichnet, dass** die Solarkollektoren oder -reflektoren (2) als Solarpaneele, Photovoltaikmodule, Spiegel od. dgl. ausgebildet sind.

3. Anlage nach Anspruch 1 oder 2, **dadurch gekennzeichnet, dass** die Hauptflächen aller auf einer gemeinsamen Aufnahmestruktur (12) montierten Solarkollektoren oder -reflektoren (2) eben ausgebildet sind und in einer gemeinsamen, verstellbaren Ebene liegen.

4. Anlage nach einem der vorhergehenden Ansprüche, **dadurch gekennzeichnet, dass** die Anschlussflächen des zweiten Anschlusselements (21) über je ein Rohr (13) oder Gestänge mit einer oder mehreren Aufnahmestrukturen (12) verbunden sind.

5. Anlage nach einem der vorhergehenden Ansprüche, **dadurch gekennzeichnet, dass** mehrere Tragstrukturen zwecks gemeinsamer, synchroner Schwenkbewegung untereinander gekoppelt sind, vorzugsweise über ein Gestänge oder über das zweite Anschlusselement der Schwenkeinheit (10).

6. Anlage nach einem der vorhergehenden Ansprüche, **dadurch gekennzeichnet, dass** eines der beiden ringförmigen Anschlusselemente (19,21) an einer Mantelfläche eine rundumlaufende Verzahnung aufweist zur Ankopplung des Drehantriebs, insbesondere das die erhabenen Anschlussflächen aufweisende, ringförmige Anschlusselement.

7. Anlage nach Anspruch 6, **dadurch gekennzeichnet, dass** der Drehantrieb wenigstens einen Motor (15) aufweist, dessen Rotor mit einer Schnecke drehfest verbundenen ist, welche mit der Verzahnung des äußeren Anschlusselements kämmt.

8. Anlage nach einem der vorhergehenden Ansprüche, **dadurch gekennzeichnet, dass** die Längsrichtung der Hauptachse (HA) in horizontaler Ausrichtung festgelegt ist, insbesondere in Ost-West-Richtung.

9. Anlage nach einem der vorhergehenden Ansprüche, **dadurch gekennzeichnet, dass** die Halteplatte vertikal ausgerichtet und von der ortsfesten Hauptachse (HA) lotrecht durchsetzt ist.

10. Anlage nach einem der vorhergehenden Ansprüche, **dadurch gekennzeichnet, dass** die Halteplatte mit wenigstens einem unterseitigen Befestigungselement zur Montage auf einem Fundament, Chassis, Rahmen, Stativ, Dreibein, Pylon oder einer Säule (6) verbunden ist.

11. Anlage nach Anspruch 10, **dadurch gekennzeichnet, dass** das Befestigungselement wenigstens eine ebene, horizontale Unterseite aufweist, beispielsweise wenigstens eine horizontale Befestigungsplatte oder Befestigungsschiene (32).

12. Anlage nach Anspruch 10 oder 11, **dadurch gekennzeichnet, dass** die Halteplatte mit wenigstens einer Befestigungsplatte oder -schiene (32) durch ein oder vorzugsweise zwei oder mehrere Verbindungs- und/oder Versteifungselemente mit jeweils mindestens einer von der Halteplatte zu der Befestigungsplatte oder -schiene (32) abwärts geneigt verlaufenden Kante verbunden ist.

13. Anlage nach einem der vorhergehenden Ansprüche, **dadurch gekennzeichnet, dass** eine die Tragstruktur (13) tragende Schwenkeinheit (10) und/oder Lagerung einen Abstand (H) zu der darunter liegenden Oberfläche aufweist, der gleich oder größer ist als die halbe Erstreckung einer Tragstruktur (13) quer zu deren Hauptachse (HA), so dass darunter noch Raum für eine anderweitige Nutzung verbleibt, insbesondere als Parkplatz.

## Claims

1. Solar collector system.(1) with at least one monoaxially around one horizontal main axis (HA) adjustable attachment structure (12) for solar collectors or reflectors to take up and/or carry the same as well as to vary their angle of declination / inclination (Ω), and with at least one rotary drive for active rotatory adjustment of the attachment structure (12) around the horizontal main axis (HA), which is designed as swivel unit (10), and with two ring-shaped connection elements (19, 21) being concentric to one another that are supported against one another and are or can be coupled with at least one motor (15) for relative adjustment against each other, where a first connection element (19) provides for stationary fixation at a base structure, pillar, or the like and a second connection element (21) is torque-proof coupled with the attachment structure (12), in which it is **characterized by** the fact that
a) The first connection element (19) is by means of a large number of parallel fastening bolts, oriented parallel to the main axis (HA), which are concentrically annular arranged distributed around the main axis (HA), anchored to a stationary and immovably fixated bracket (14), in particular to a holding plate, where the center angle between neighboring fastening bolts is equal to or less than 60°, preferably equal to or less than 45°, specifically equal to or less than 30°.
b) The second connection element (21) exhibits two jointing surfaces at face sides opposite to each other, which are raised in the respective axial direction opposite to the first connection element.

2. System according to claim 1, **characterized by** the fact that the solar collectors or reflectors (2) are developed as solar panels, photovoltaic modules, mirrors, or the like.

3. System according to claim 1 or 2, **characterized by** the fact that the main surface of all solar collectors or reflectors (2) mounted on a common attachment structure (12) are formed planar and are lying in one common adjustable coplanarity.

4. System according to one of the foregoing claims, **characterized by** the fact that the jointing surfaces of the second connection element (21) are connected via a tube (13) or rod system with one or several attachment structures (12).

5. System according to one of the foregoing claims, **characterized by** the fact that several carrying structures are coupled to one another for the purpose of joint synchronous swiveling movement, preferably by way of a rod system, or via the second connection element (21) of the swivel unit (10).

6. System according to one of the foregoing claims, **characterized by** the fact that one of the two ring-shaped connection elements (19, 21) exhibits a circumferential tooth system at a jacket surface for coupling to the rotary drive, in particular the ring-shaped connection element exhibiting the raised jointing surfaces.

7. System according to claim 6, **characterized by** the fact that the rotary drive exhibits at least one motor (15), where the rotor of which is torque-proof connected to a worm gear, which is cogging with the tooth system of the outer connection element.

8. System according to one of the foregoing claims, **characterized by** the fact that the longitudinal direction of the main axis (HA) is fixed in horizontal orientation, specifically in east-west direction.

9. System according to one of the foregoing claims, **characterized by** the fact that the holding plate is oriented vertically, and is penetrated perpendicular to it by the stationary main axis (HA).

10. System according to one of the foregoing claims, **characterized by** the fact that the holding plate is connected to at least one fastening element at the bottom side for mounting it on a foundation, chassis, frame, stand, tripod, pylon or a column (6).

11. System according to claim 10, **characterized by** the fact that the fastening element exhibits at least one planar horizontal bottom surface, for example at least one horizontal mounting plate or fastening rail (32).

12. System according to claim 10 or 11, **characterized by** the fact that the holding plate is connected to at least one mounting plate or fastening rail (32) by means of one or preferably two or more connecting and/or stiffening elements with at least one edge running downward from the holding plate to the mounting plate or fastening rail (32).

13. System according to one of the foregoing claims, **characterized by** the fact that a swivel unit (10) and/or bearing system supporting the carrying structure (13) exhibits a distance (H) to the surface located below it, which is equal to or greater than half of the extension of one carrying structure (13) crosswise to its main axis (HA), so that space for other utilization is remaining below it, specifically as car parking space.

## Revendications

1. Installation solaire (1) dotée au moins d'une structure de support (12) réglable sur un axe autour d'un axe principal horizontal (HA) pour la réception et/ou le support de capteurs ou réflecteurs solaires ainsi que pour la modification de leur angle d'inclinaison ou d'élévation (Ω), et comportant au moins un entraînement rotatif pour le réglage actif, rotatif de la structure de support (12) autour de l'axe principal horizontal (HA), ledit entraînement est réalisé sous forme d'unité pivotante (10) avec deux éléments de raccordement (19, 21) annulaires, concentriques l'un par rapport à l'autre, qui sont juxtaposés et accouplés ou peuvent être accouplés pour le réglage relatif mutuel à au moins un moteur (15), où un premier élément de raccordement (19) sert à la fixation stationnaire sur un socle, un support ou analogue et un second élément de raccordement (21) est accouplé solidairement en rotation à la structure de support (12), où le second élément de raccordement (21) présente deux faces de raccordement au niveau des faces frontales opposées l'une par rapport à l'autre, lesquelles sont saillantes par rapport au premier élément de raccordement dans le sens axial respectif,
**caractérisée en ce que**
le premier élément de raccordement (19) est ancré au moyen d'une pluralité de vis de fixation en forme de couronne autour de l'axe principal (HA), réparties parallèlement à l'axe principal (HA) sur un support (14) stationnaire et fixé de manière immobile, en particulier sur une plaque support, où l'angle au centre entre des vis de fixation adjacentes est égal ou inférieur à 60°, de préférence égal ou inférieur à 45°, en particulier égal ou inférieur à 30°.

2. Installation selon la revendication 1, **caractérisée en ce que** les capteurs ou réflecteurs solaires (2) sont conçus comme panneaux solaires, modules photovoltaïques, miroirs ou analogues.

3. Installation selon la revendication 1 ou 2, **caractérisée en ce que** les surfaces principales de tous les capteurs ou réflecteurs solaires (2) montés sur une structure de support (12) commune sont réalisés de manière plane et se trouvent dans un plan commun réglable.

4. Installation selon l'une des revendications précédentes, **caractérisée en ce que** les faces de raccordement du second élément de raccordement (21) sont reliées à une ou plusieurs structures de support (12) par l'intermédiaire respectivement d'un tube (13) ou de tiges.

5. Installation selon l'une des revendications précédentes, **caractérisée en ce que** plusieurs structures porteuses sont accouplées entre elles à des fins de mouvement pivotant commun synchrone, de préférence par l'intermédiaire de tiges ou par le biais du second élément de raccordement de l'unité pivotante (10).

6. Installation selon l'une des revendications précédentes, **caractérisée en ce que** l'un des deux éléments de raccordement annulaires (19, 21) présente au niveau d'une surface latérale une denture circonférentielle pour le couplage de l'entraînement rotatif, en particulier l'élément de raccordement annulaire présentant les faces de raccordement saillantes.

7. Disposition selon la revendication 6, **caractérisée en ce que** l'entraînement rotatif présente au moins un moteur (15), dont le rotor est relié solidairement en rotation à une vis sans fin qui est en prise avec la denture de l'élément de raccordement extérieur.

8. Installation selon l'une des revendications précédentes, **caractérisée en ce que** le sens longitudinal de l'axe principal (HA) est défini dans un alignement horizontal, en particulier dans la direction est-ouest.

9. Installation selon l'une des revendications précédentes, **caractérisée en ce que** la plaque support est alignée verticalement et entrecoupée perpendiculairement par l'axe principal (HA) stationnaire.

10. Installation selon l'une des revendications précédentes, **caractérisée en ce que** la plaque support est reliée à une face inférieure d'au moins un élément de fixation pour le montage sur une embase, un châssis, un cadre, un pied, un trépied, un pylône ou une colonne (6).

11. Installation selon la revendication 10, **caractérisée en ce que** l'élément de fixation présente au moins une face inférieure plane horizontale, par exemple au moins une plaque de fixation ou un rail de fixation horizontal (32).

12. Installation selon la revendication 10 ou 11, **caractérisée en ce que** la plaque support avec au moins une plaque ou rail de fixation (32) est reliée par un ou de préférence deux ou plusieurs éléments de raccordement et/ou de renfort à respectivement au moins un bord présentant une inclinaison vers le bas à partir de la plaque support vers la plaque ou rail de fixation (32).

13. Installation selon l'une des revendications précédentes, **caractérisée en ce qu'**une unité pivotante (10) et/ou un palier portant la structure porteuse (13) présente une distance (H) par rapport à la surface sous-jacente qui est égale ou supérieure à la demi-extension d'une structure porteuse (13) transversalement par rapport à son axe principal (HA) de sorte qu'il reste en dessous encore de la place pour une autre utilisation, en particulier comme parking.
